(19) Europäisches Patentamt
European Patent Office
Office européen des brevets

(11) EP 2 548 906 A1

(12) EUROPÄISCHE PATENTANMELDUNG

(43) Veröffentlichungstag:
**23.01.2013 Patentblatt 2013/04**

(51) Int Cl.:
***C08G 64/34*** *(2006.01)* ***C08G 65/26*** *(2006.01)*

(21) Anmeldenummer: **11174410.8**

(22) Anmeldetag: **18.07.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Bayer MaterialScience AG**
**51373 Leverkusen (DE)**

(72) Erfinder:
- **Dr. Müller, Thomas, Ernst**
**51368 Leverkusen (DE)**
- **Dr. Gürtler, Christoph**
**51368 Leverkusen (DE)**
- **Dr. Wohak, Matthias**
**41538 Dormagen (DE)**
- **Dr. Hofmann, Jörg**
**41538 Dormagen (DE)**
- **Dr. Subhani, Afzal**
**52070 Aachen (DE)**
- **Cosemans, Maurice**
**52525 Heinsberg (DE)**
- **Prof. dr. leitner, Walter**
**52074 Aachen (DE)**

# (54) Verfahren zur Aktivierung von Doppelmetallcyanidkatalysatoren zur Herstellung von Polyetherpolyolen

(57) Die vorliegende Erfindung betrifft ein Verfahren zur Aktivierung von Doppelmetallcyanid (DMC)-Katalysatoren und ein Verfahren zur Herstellung von Polyethercarbonatpolyolen aus einer oder mehreren H-funktionellen Starterverbindungen, eines oder mehrerer Alkylenoxiden und Kohlendioxid in Gegenwart eines Doppelmetallcyanid-Katalysators, dadurch gekennzeichnet, dass
(α)
(α1) in einem Reaktor der DMC-Katalysator und eine oder mehrere H-funktionelle Starterverbindungen vorgelegt werden,
(α2) durch den Reaktor bei einer Temperatur von 50 bis 200°C ein Inertgas, ein Inertgas-Kohlendioxid-Gemisch oder Kohlendioxid geleitet wird und gleichzeitig durch Entfernen des Inertgases oder Kohlendioxid ein reduzierter Druck (absolut) von 10 mbar bis 800 mbar im Reaktor eingestellt wird,

(β) zu dem Gemisch aus Schritt (α) unter einer Atmosphäre aus Inertgas-Kohlendioxid-Gemisch oder unter einer reinen Kohlendioxid-Atmosphäre Alkylenoxid bei Temperaturen von 50 bis 200°C zugegeben wird, und
(γ) ein oder mehrere Alkylenoxide und Kohlendioxid zu der aus Schritt (β) resultierenden Mischung dosiert werden.

EP 2 548 906 A1

**Beschreibung**

Die vorliegende Erfindung betrifft ein Verfahren zur Aktivierung von Doppelmetallcyanid (DMC)-Katalysatoren unter Kohlendioxid-Atmosphäre für die Herstellung von Polyethercarbonatpolyolen durch katalytische Copolymerisation von Kohlendioxid ($CO_2$) mit Alkylenoxiden in Gegenwart einer oder mehrerer H-funktioneller Startersubstanzen.

Die Herstellung von Polyethercarbonatpolyolen durch katalytische Umsetzung von Alkylenoxiden (Epoxiden) und Kohlendioxid in Anwesenheit von H-funktionellen Startersubstanzen ("Starter") wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion ist in Schema (I) schematisch dargestellt, wobei R für einen organischen Rest wie Alkyl, Alkyaryl oder Aryl steht, der jeweils auch Heteroatome wie beispielsweise O, S, Si usw. enthalten kann, und wobei e und f für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters aber variieren kann und nicht auf das in Schema (I) gezeigte Polyethercarbonatpolyol beschränkt ist. Diese Reaktion (siehe Schema (I)) ist ökologisch sehr vorteilhaft, da diese Reaktion die Umsetzung eines Treibhausgases wie $CO_2$ zu einem Polymer darstellt. Als weiteres Produkt, eigentlich Nebenprodukt, entsteht das in Schema (I) gezeigte cyclische Carbonat (beispielsweise für R = $CH_3$ Propylencarbonat).

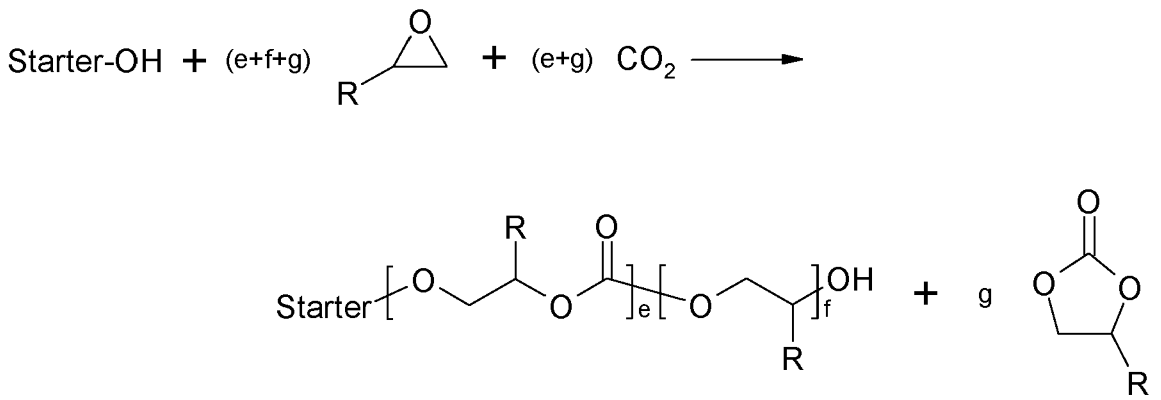

(I)

Als Aktivierung im Sinne dieser Erfindung wird ein Schritt bezeichnet, bei dem eine Teilmenge Alkylenoxidverbindung, gegebenenfalls in Gegenwart von $CO_2$ und/oder H-funktioneller Starterverbindung, zum DMC-Katalysator gegeben wird und dann die Zugabe der Alkylenoxidverbindung unterbrochen wird, wobei aufgrund einer folgenden exothermen chemischen Reaktion eine Wärmeentwicklung, die zu einer Temperaturspitze ("Hotspot") führen kann, sowie aufgrund der Umsetzung von Alkylenoxid und gegebenenfalls $CO_2$ ein Druckabfall im Reaktor beobachtet wird. Gegebenenfalls kann die Zugabe der Teilmenge der Alkylenoxidverbindung in mehreren Einzelschritten erfolgen, wobei in der Regel jeweils das Auftreten der Wärmeentwicklung abgewartet wird. Der Verfahrensschritt der Aktivierung umfasst die Zeitspanne von Beginn der Zugabe der Teilmenge an Alkylenoxidverbindung, gegebenenfalls in Gegenwart von $CO_2$, zum DMC-Katalysator bis zum Auftreten der Wärmeentwicklung. Bei Zugabe der Teilmenge der Alkylenoxidverbindung in mehreren Einzelschritten umfasst der Verfahrensschritt der Aktivierung alle Zeitspannen, während der die Teilmengen der Alkylenoxidverbindung schrittweise zugegeben wurden bis zum Auftreten der jeweiligen Wärmeentwicklung. Im Allgemeinen kann dem Aktivierungsschritt ein Schritt zum Trocknen des DMC-Katalysators und gegebenenfalls der H-funktionellen Starterverbindung bei erhöhter Temperatur und/oder reduziertem Druck, gegebenenfalls unter Durchleiten eines Inertgases durch die Reaktionsmischung, vorgelagert sein.

EP-A 0 222 453 offenbart ein Verfahren zur Herstellung von Polycarbonaten aus Alkylenoxiden und Kohlendioxid unter Verwendung eines Katalysatorsystems aus DMC-Katalysator und einem CoKatalysator wie Zinksulfat. Dabei wird die Polymerisation initiiert, indem einmalig ein Teil des Alkylenoxids mit dem Katalysatorsystem in Kontakt gebracht wird. Erst danach werden die Restmenge Alkylenoxid und das Kohlendioxid simultan zudosiert. Die bei EP-A 0 222 453 für den Aktivierungsschritt in den Beispielen 1 bis 7 angegebene Menge von 60 Gew.-% Alkylenoxidverbindung relativ zur H-funktionellen Starterverbindung ist hoch und hat den Nachteil, dass dies für großtechnische Anwendungen aufgrund der hohen Exothermie der Homo-Polymerisation von Alkylenoxidverbindungen ein gewisses Sicherheitsrisiko darstellt.

WO-A 2003/029325 offenbart ein Verfahren zur Herstellung von hochmolekularen aliphatischen Polyethercarbonatpolyolen (gewichtsmittleres Molekulargewicht größer als 30000 g/mol), bei dem ein Katalysator aus der Gruppe bestehend aus Zinkcarboxylat und Multimetallcyanidverbindung eingesetzt wird, der wasserfrei ist und der zunächst mit zumindest einer Teilmenge des Kohlendioxids in Kontakt gebracht wird, bevor man das Alkylenoxid zufügt. $CO_2$-Enddrücke von bis zu 150 bar stellen sehr hohe Anforderungen an den Reaktor sowie an die Sicherheit. Selbst durch den

überaus hohen Druck von 150 bar wurden nur ca. 33 Gew.-% $CO_2$ bis maximal 42 Gew.-% $CO_2$ eingebaut. Die dargelegten Beispiele beschreiben die Verwendung eines Lösemittels (Toluol), das nach der Reaktion wieder thermisch abgetrennt werden muss, was zu erhöhtem Zeit- und Kostenaufwand führt. Des Weiteren weisen die Polymere mit einer Uneinheitlichkeit bzw. Polydispersität von 2,7 oder mehr eine sehr breite Molmassenverteilung auf.

Es war daher Aufgabe der vorliegenden Erfindung, ein Verfahren zur Herstellung von Polyethercarbonatpolyolen bereitzustellen, welches sowohl zu einem hohen Gehalt an ins Polymer eingebautem $CO_2$ führt und gleichzeitig eine günstige Selektivität (d.h. niedriges Verhältnis von cyclischem Carbonat zu Polyethercarbonatpolyol) des resultierenden Polyethercarbonatpolyols bewirkt.

Überraschend wurde gefunden, dass die erfindungsgemäße Aufgabe gelöst wird durch ein Verfahren zur Herstellung von Polyethercarbonatpolyolen aus einer oder mehreren H-funktionellen Startersubstanzen, eines oder mehrerer Alkylenoxide und Kohlendioxid in Gegenwart eines DMC-Katalysators, dadurch gekennzeichnet, dass der DMC-Katalysator unter Kohlendioxid-Atmosphäre aktiviert wird. Gegenstand der Erfindung ist auch die Aktivierung von DMC-Katalysatoren, wobei der DMC-Katalysator unter Kohlendioxid-Atmosphäre und gegebenenfalls in Gegenwart einer oder mehrerer H-funktioneller Starterverbindungen aktiviert wird.

Gegenstand der Erfindung ist somit ein Verfahren zur Herstellung von Polyethercarbonatpolyolen aus einer oder mehreren H-funktionellen Starterverbindungen, eines oder mehrerer Alkylenoxide und Kohlendioxid in Gegenwart eines DMC-Katalysators, dadurch gekennzeichnet, dass

($\alpha$)

($\alpha$1) in einem Reaktor der DMC-Katalysator und eine oder mehrere H-funktionelle Starterverbindungen vorgelegt werden,

($\alpha$2) durch den Reaktor bei einer Temperatur von 50 bis 200°C, bevorzugt von 80 bis 160°C, besonders bevorzugt von 125 bis 135°C ein Inertgas (beispielsweise Stickstoff oder ein Edelgas wie Argon), ein Inertgas-Kohlendioxid-Gemisch oder Kohlendioxid geleitet wird und gleichzeitig durch Entfernen des Inertgases oder Kohlendioxids (beispielsweise mit einer Pumpe) ein reduzierter Druck (absolut) von 10 mbar bis 800 mbar, bevorzugt von 40 mbar bis 200 mbar im Reaktor eingestellt wird ("Trocknung"),

($\beta$) zu dem Gemisch aus Schritt ($\alpha$) unter einer Atmosphäre aus Inertgas-Kohlendioxid-Gemisch (beispielsweise Stickstoff-Kohlendioxid-Gemisch oder Argon-Kohlendioxid-Gemisch) oder unter einer Kohlendioxid-Atmosphäre eine Teilmenge (bezogen auf die Gesamtmenge der in den Schritten ($\beta$) und ($\gamma$) eingesetzten Menge an Alkylenoxiden) von einem oder mehreren Alkylenoxiden bei Temperaturen von 50 bis 200°C, bevorzugt von 80 bis 160°C, besonders bevorzugt von 125 bis 135°C zugegeben wird ("Aktivierung"), und

($\gamma$) ein oder mehrere Alkylenoxide und Kohlendioxid zu der aus Schritt ($\beta$) resultierenden Mischung fortwährend dosiert werden ("Copolymerisation"). Die für die Copolymerisation eingesetzten Alkylenoxide können gleich oder verschieden sein von den bei Schritt ($\beta$) eingesetzten Alkylenoxiden.

In einer bevorzugten Ausführungsform beträgt die bei der Aktivierung in Schritt ($\beta$) eingesetzte Menge von einem oder mehreren Alkylenoxiden 0,1 bis 25,0 Gew.-%, bevorzugt 1,0 bis 20,0 Gew.-%, besonders bevorzugt 2,0 bis 16,0 Gew.-% (bezogen auf die im Schritt ($\alpha$) eingesetzte Menge an Starterverbindung). Das Alkylenoxid kann in einem Schritt oder schrittweise in mehreren Teilmengen zugegeben werden. Der DMC-Katalysator wird vorzugsweise in einer Menge eingesetzt, so dass der Gehalt an DMC-Katalysator im resultierenden Polyethercarbonatpolyol 10 bis 10000 ppm, besonders bevorzugt 20 bis 5000 ppm und höchst bevorzugt 50 bis 500 ppm beträgt.

Gegenstand der Erfindung ist somit auch ein Verfahren zur Aktivierung von DMC-Katalysatoren, dadurch gekennzeichnet, dass

($\alpha$)

($\alpha$1) in einem Reaktor der DMC-Katalysator und eine oder mehrere H-funktionelle Starterverbindungen vorgelegt werden,

($\alpha$2) durch den Reaktor bei einer Temperatur von 50 bis 200°C, bevorzugt von 80 bis 160°C, besonders bevorzugt von 125 bis 135°C ein Inertgas (beispielsweise Stickstoff oder ein Edelgas wie Argon), ein Inertgas-Kohlendioxid-Gemisch oder Kohlendioxid geleitet wird und gleichzeitig durch Entfernen des Inertgases oder Kohlendioxid (beispielsweise mit einer Pumpe) ein reduzierter Druck (absolut) von 10 mbar bis 800 mbar, bevorzugt von 40 mbar bis 200 mbar im Reaktor eingestellt wird,

($\beta$) zu dem Gemisch aus Schritt ($\alpha$) unter einer Atmosphäre aus Inertgas-Kohlendioxid-Gemisch (beispielsweise Stickstoff-Kohlendioxid-Gemisch oder Argon-Kohlendioxid-Gemisch) oder unter einer reinen Kohlendioxid-Atmosphäre Alkylenoxid bei Temperaturen von 50 bis 200°C, bevorzugt von 80 bis 160°C, besonders bevorzugt von 125 bis 135°C zugegeben wird.

Zu Schritt (α):

Die Zugabe der einzelnen Komponenten in Schritt (α1) kann gleichzeitig oder nacheinander in beliebiger Reihenfolge erfolgen; bevorzugt wird in Schritt (α1) zunächst DMC-Katalysator vorgelegt und gleichzeitig oder anschließend H-funktionelle Starterverbindung zugesetzt.

Gegenstand einer weiteren bevorzugten Ausführungsform ist ein Verfahren, wobei in Schritt (α)

(α1) die H-funktionelle Starterverbindung oder ein Gemisch aus mindestens zwei H-funktionellen Starterverbindungen, gegebenenfalls unter Inertgasatmosphäre (beispielsweise Stickstoff oder Argon), unter einer Atmosphäre aus Inertgas-Kohlendioxid-Gemisch oder unter einer reinen Kohlendioxid-Atmosphäre, besonders bevorzugt unter Inertgasatmosphäre (beispielsweise Stickstoff oder Argon) vorgelegt wird und
(α2) in das resultierende Gemisch aus DMC-Katalysator und einer oder mehrerer H-funktioneller Starterverbindungen bei einer Temperatur von 50 bis 200°C, bevorzugt von 80 bis 160°C, besonders bevorzugt von 125 bis 135°C ein Inertgas (beispielsweise Stickstoff oder ein Edelgas wie Argon), ein Inertgas-Kohlendioxid-Gemisch oder Kohlendioxid, besonders bevorzugt Inertgas (beispielsweise Stickstoff oder Argon) eingeleitet wird und gleichzeitig durch Entfernen des Inertgases oder Kohlendioxid (beispielsweise mit einer Pumpe) ein reduzierter Druck (absolut) von 10 mbar bis 800 mbar, bevorzugt von 40 mbar bis 200 mbar im Reaktor eingestellt wird,

wobei der Doppelmetallcyanid-Katalysator zu der H-funktionellen Startersubstanz oder dem Gemisch von mindestens zwei H-funktionellen Startersubstanzen in Schritt (α1) oder unmittelbar anschließend in Schritt (α2) zugesetzt werden.

Der DMC-Katalysator kann in fester Form oder als Suspension in einer H-funktionellen Starterverbindung zugegeben werden. Wird der DMC-Katalysator als Suspension zugegeben, wird diese bevorzugt in Schritt (α1) der ein oder mehreren H-funktionellen Starterverbindungen zugefügt.

Zu Schritt (β)

Das Einstellen einer Atmosphäre aus Inertgas-Kohlendioxid-Gemisch (beispielsweise Stickstoff-Kohlendioxid-Gemisch oder Argon-Kohlendioxid-Gemisch) oder einer reinen Kohlendioxid-Atmosphäre und die Dosierung eines oder mehrerer Alkylenoxide können prinzipiell in unterschiedlicher Weise erfolgen. Der Vordruck wird bevorzugt durch Einleiten von Kohlendioxid eingestellt, wobei der Druck (absolut) 10 mbar bis 100 bar, vorzugsweise 100 mbar bis 50 bar und bevorzugt 500 mbar bis 50 bar beträgt. Der Start der Dosierung des Alkylenoxids kann aus dem Vakuum heraus oder bei einem zuvor gewählten Vordruck erfolgen. Als Gesamtdruck (absolut) der Atmosphäre aus Inertgas-Kohlendioxid-Gemisch (beispielsweise Stickstoff-Kohlendioxid-Gemisch oder Argon-Kohlendioxid-Gemisch) oder einer reinen Kohlendioxid-Atmosphäre und ggf Alkylenoxid wird in Schritt (β) vorzugsweise ein Bereich von 10 mbar bis 100 bar, vorzugsweise 100 mbar bis 50 bar und bevorzugt 500 mbar bis 50 bar eingestellt. Gegebenenfalls wird während oder nach der Dosierung des Alkylenoxids der Druck durch Einleiten von weiterem Kohlendioxid nachgeregelt, wobei der Druck (absolut) 10 mbar bis 100 bar, vorzugsweise 100 mbar bis 50 bar und bevorzugt 500 mbar bis 50 bar beträgt.

Zu Schritt (γ)

Die Dosierung eines oder mehrerer Alkylenoxide und des Kohlendioxids kann simultan, wechselweise oder sequentiell erfolgen, wobei die gesamte Kohlendioxidmenge auf einmal oder dosiert über die Reaktionszeit zugegeben werden kann. Es ist möglich, während der Zugabe des Alkylenoxids den $CO_2$-Druck allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung eines oder mehrerer Alkylenoxide bzw. das $CO_2$ erfolgt simultan, wechselweise oder sequentiell zur Kohlendioxid Dosierung. Es ist möglich, das Alkylenoxid mit konstanter Dosierrate zu dosieren oder die Dosierrate allmählich oder schrittweise zu steigern oder zu senken oder das Alkylenoxid Portionsweise zuzugeben. Bevorzugt wird das Alkylenoxid mit konstanter Dosierrate dem Reaktionsgemisch zugegeben. Werden mehrere Alkylenoxide zur Synthese der Polyethercarbonatpolyole eingesetzt, so können die Alkylenoxide einzeln oder als Gemisch dosiert werden können. Die Dosierung der Alkylenoxide kann simultan, wechselweise oder sequentiell über jeweils separate Dosierungen (Zugaben) erfolgen oder über eine oder mehrere Dosierungen, wobei die Alkylenoxide einzeln oder als Gemisch dosiert werden können. Über die Art und/oder Reihenfolge der Dosierung der Alkylenoxide und/oder des Kohlendioxids ist es möglich, statistische, alternierende, blockartige oder gradientenartige Polyethercarbonatpolyole zu synthetisieren.

Vorzugsweise wird ein Überschuss an Kohlendioxid bezogen auf die berechnete Menge an eingebautem Kohlendioxid im Polyethercarbonatpolyol eingesetzt, da bedingt durch die Reaktionsträgheit von Kohlendioxid ein Überschuss von Kohlendioxid von Vorteil ist. Die Menge an Kohlendioxid kann über den Gesamtdruck bei den jeweiligen Reaktionsbedingungen festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der Polyethercarbonatpolyole als vorteilhaft erwiesen. Es ist möglich, das Kohlendioxid kontinuierlich oder diskontinuierlich zuzuführen. Dies hängt davon ab, wie schnell die Alkylenoxide und das $CO_2$ verbraucht werden und ob das Produkt gegebenenfalls $CO_2$-freie Polyether-Blöcke oder Blöcke mit unterschiedlichem $CO_2$-Gehalt enthalten soll. Die Menge des Kohlendioxids (angegeben als Druck) kann bei der Zugabe der Alkylenoxide ebenso variieren. Je nach den gewählten Reaktionsbedingungen ist es möglich, das $CO_2$ im gasförmigen, flüssigen oder überkritischen Zustand in den Reaktor einzuleiten. $CO_2$ kann auch als Feststoff in den Reaktor gegeben werden und dann unter den gewählten Reaktionsbedingungen in den gasförmigen, gelösten, flüssigen und/oder überkritischen Zustand übergehen.

Für das erfindungsgemäße Verfahren hat sich weiterhin gezeigt, dass die Copolymerisation (Schritt (γ)) zur Herstellung der Polyethercarbonatpolyole vorteilhafterweise bei 50 bis 150°C, bevorzugt bei 60 bis 145°C, besonders bevorzugt bei 70 bis 140°C und ganz besonders bevorzugt bei 90 bis 130°C durchgeführt wird. Unterhalb von 50°C läuft die Reaktion nur sehr langsam ab. Bei Temperaturen oberhalb von 150°C steigt die Menge an unerwünschten Nebenprodukten stark an.

In den Schritten (β) und/oder (γ) wird das Kohlendioxid bevorzugt in die Mischung eingeleitet durch

(i) Begasung des Reaktionsgemisches im Reaktor von unten (beispielsweise über ein Einleitrohr oder einen Begasungsring (Verteilring) mit Führung des Gases unterhalb des Rührflügels) und je nach Gasbeladung gegebenenfalls in Kombination mit einem GasZerteilungsrührer (beispielsweise ein Scheibenrührer, Schaufelrührer, Rushton-Turbine (zum Beispiel Lightnin R-100®, Ekato PHASE-JET®, Smith-Turbine® von Philadelphia Mixing Solutions, Chemineer BT-6® oder CD-6® Rührflügel), wobei gegebenenfalls auf der Rührwelle weitere Rührorgane (beliebigen Typs, z.B. je nach Schlankheitsgrad des Reaktors axial-fördernde Turbinen, den Wärmeübergang zu innen-liegenden Kühlflächen unterstützende und/oder den Stoffübergang über die Flüssigkeitsoberfläche fördernde Rührorgane) angeordnet sind; eine Kombination von zwei oder mehreren Rührorganen hat den technischen Vorteil, dass der Stoffübergang des Gases in die flüssige Phase an der Oberfläche der Reaktionsmischung verbessert werden kann;
(ii) Verwendung eines Hohlwellenrührers (d.h. mittels des Prinzips des Strahlsaugers), beispielsweise als Rohrrührer, Schrägblatt-Turbine mit Hohlflügeln, Ekato GASJET®, PREMEX Laborbegasungsrüher der "br"-Serie, Laborbegasungsrührer von Parr Instruments; Die Verwendung eines Hohlwellenrührers bewirkt, dass die sich im Gasraum ansammelnde Gasphase über eine Hohlwelle angesaugt und erneut von unten in die Reaktionsmischung eingebracht wird;
(iii) Kombination aus den Dosierungen gemäß (i) und (ii), was vorteilhaft für den Betrieb bei konstantem Füllstand im Reaktor ist; Beispielsweise kann die Kombination aus den Dosierungen gemäß (i) und (ii) derart erfolgen, dass eine Begasung des Reaktionsgemisches im Reaktor von unten gemäß einer der unter (i) genannten Möglichkeiten mit einem Hohlwellenrührer gemäß (ii) (wie beispielsweise einem Gaszerteilungsrührer mit darüber angeordnetem Strahlsauger als zweite Dispergierstufe) kombiniert wird, vorzugsweise derart, dass die Einleitung des Gases von unten unterhalb des Hohlwellenrührers erfolgt; und/oder
(iv) Begasung über die Flüssigkeitsoberfläche durch Einsatz entsprechender, typischerweise mehrstufiger ausgeführter Rührorgane (wie z.B. MIG oder Ekato MIG / INTERMIG®) bzw. mittels an der Flüssigkeitoberfläche wirkender Rührorgane (z.B. Gitterrührer).

Die Auslegung der Rührbedingungen sind fallbezogen vom Fachmann in Abhängigkeit der Reaktionsbedingungen (z.B. Flüssigphasenviskosität, Gasbeladung, Oberflächenspannung) nach Stand der Rührtechnik vorzunehmen, um z.B. ein Überfluten eines von unten begasten Rührorgans sicher zu vermeiden bzw. den gewünschten Leistungseintrag und/oder Stoffübergang im Begasungszustand sicherzustellen. Gegebenfalls enthält der Reaktor Einbauten wie beispielsweise Stromstörer und/oder Kühlflächen (ausgeführt als Rohr, Wendel, Platten oder in ähnlicher Form), Begasungsring und/oder Einleitrohr. Weitere Wärmetauscherflächen können in einem Umpumpkreislauf angeordnet werden, wobei die Reaktionsmischung dann über geeignete Pumpen (z.B. Schraubenspindelpumpe, Zentrifugal- oder Zahnradpumpe) gefördert wird. Der Kreislaufstrom kann hierbei z.B. auch über eine Injektordüse in den Reaktor zurückgeführt werden, wodurch ein Teil des Gasraums angesogen und zwecks Verbesserung des Stoffübergangs intensiv mit der Flüssigphase vermischt wird.

Die Begasung des Reaktionsgemisches im Reaktor gemäß (i) erfolgt bevorzugt über einen Begasungsring, eine Begasungsdüse oder über ein Gaseinleitungsrohr. Bei dem Begasungsring handelt es sich vorzugsweise um eine ringförmige Anordnung oder um zwei oder mehrere ringförmige Anordnungen von Begasungsdüsen, die bevorzugt am Boden des Reaktors und/oder an der Seitenwand des Reaktors angeordnet sind.

Der Hohlwellenrührer ist bevorzugt ein Rührer, bei dem das Gas über eine hohle Welle des Rührers in die Reaktionsmischung eingeleitet wird. Durch die Drehung des Rührers in der Reaktionsmischung (d.h. beim Mischen)

entsteht an dem mit der Hohlwelle verbundenen Ende des Rührflügels ein Unterdruck derart, dass die Gasphase (enthaltend $CO_2$ und ggf. unverbrauchtem Alkylenoxid) aus dem über der Reaktionsmischung befindlichen Gasraum abgesaugt wird und über die Hohlwelle des Rührers in die Reaktionsmischung geleitet wird.

Die Begasung des Reaktionsgemisches gemäß (i), (ii), (iii) oder (iv) kann jeweils mit frisch zudosiertem Kohlendioxid erfolgen (und/oder kombiniert werden mit einer Absaugung des Gases aus dem Gasraum über der Reaktionsmischung und anschließender Re-Kompression des Gases. Beispielsweise wird das aus dem Gasraum über der Reaktionsmischung abgesaugte und komprimierte Gas, gegebenenfalls gemischt mit frischem Kohlendioxid und/oder Alkylenoxid, in das Reaktionsgemisches gemäß (i), (ii), (iii) und/oder (iv) eingeleitet. Bevorzugt wird über frisch zudosiertes Kohlendioxid der Druckabfall ausgeglichen, der über Einbau des Kohlendioxids und des Alkylenoxids bei der Copolymerisation in das Reaktionsprodukt entsteht.

Die Einleitung des Alkylenoxids kann separat oder zusammen mit dem $CO_2$ sowohl über die Flüssigkeitsoberfläche oder direkt in die flüssige Phase erfolgen. Bevorzugt erfolgt die Einleitung des Alkylenoxids direkt in die flüssige Phase, da dies den Vorteil hat, dass eine rasche Durchmischung des eingebrachten Alkylenoxids mit der flüssigen Phase erfolgt und so lokale Konzentrationsspitzen von Alkylenoxid vermieden werden. Die Einleitung in die flüssige Phase kann über ein oder mehrere Einleitungsrohre, eine oder mehrere Düsen oder eine oder mehrere ringförmige Anordnungen von Mehrfach-Dosierstellen erfolgen, die bevorzugt am Boden des Reaktors und/oder an der Seitenwand des Reaktors angeordnet sind.

Die drei Schritte $\alpha$, $\beta$ und $\gamma$ können in demselben Reaktor oder jeweils separat in unterschiedlichen Reaktoren durchgeführt werden. Besonders bevorzugte Reaktortypen sind Rührkessel, Rohrreaktor, und Schlaufenreaktor. Werden die Reaktionsschritte $\alpha$, $\beta$ und $\gamma$ in unterschiedlichen Reaktoren durchgeführt, kann für jeden Schritt ein unterschiedlicher Reaktortyp verwenden werden.

Polyethercarbonatpolyole können in einem Rührkessel hergestellt werden, wobei der Rührkessel je nach Ausführungsform und Betriebsweise über den Reaktormantel, innen liegende und/oder in einem Umpumpkreislauf befindliche Kühlflächen gekühlt wird. Sowohl in der semi-batch Anwendung, bei der das Produkt erst nach Ende der Reaktion entnommen wird, als auch in der kontinuierlichen Anwendung, bei der das Produkt kontinuierlich entnommen wird, ist besonders auf die Dosiergeschwindigkeit des Alkylenoxids zu achten. Sie ist so einzustellen, dass trotz der inhibierenden Wirkung des Kohlendioxids die Alkylenoxide genügend schnell abreagieren. Die Konzentration an freien Alkylenoxiden in der Reaktionsmischung während dem Aktivierungsschritt (Schritt $\beta$) beträgt vorzugsweise > 0 bis 100 Gew.-%, besonders bevorzugt > 0 bis 50 Gew-%, höchst bevorzugt > 0 bis 20 Gew.-% (jeweils bezogen auf das Gewicht der Reaktionsmischung). Die Konzentration an freien Alkylenoxiden in der Reaktionsmischung während der Reaktion (Schritt $\gamma$) beträgt vorzugsweise > 0 bis 40 Gew.-%, besonders bevorzugt > 0 bis 25 Gew-%, höchst bevorzugt > 0 bis 15 Gew.-% (jeweils bezogen auf das Gewicht der Reaktionsmischung).

Eine weitere mögliche Ausführungsform im Rührkessel (batch) für die Copolymerisation (Schritt $\gamma$) ist dadurch gekennzeichnet, dass eine oder mehrere H-funktionelle Starterverbindungen während der Reaktion kontinuierlich in den Reaktor zudosiert werden. Bei einer Durchführung des Verfahrens im semi-batch Betrieb beträgt die Menge der H-funktionellen Starterverbindungen, die während der Reaktion kontinuierlich in den Reaktor zudosiert werden, bevorzugt mindestens 20 mol% Äquivalente, besonders bevorzugt 70 bis 95 mol% Äquivalente (jeweils bezogen auf die gesamte Menge an H-funktionellen Starterverbindungen). Bei einer kontinuierlichen Durchführung des Verfahrens beträgt die Menge der H-funktionellen Starterverbindungen, die während der Reaktion kontinuierlich in den Reaktor zudosiert werden, bevorzugt mindestens 80 mol% Äquivalente, besonders bevorzugt 95 bis 105 mol% Äquivalente (jeweils bezogen auf die gesamte Menge an H-funktionellen Starterverbindungen).

In einer bevorzugten Ausführungsform wird die gemäß den Schritten $\alpha$ und $\beta$ aktivierte Katalysator-Starter-Mischung in demselben Reaktor weiter mit Alkylenoxiden und Kohlendioxid umgesetzt. In einer weiteren bevorzugten Ausführungsform wird die gemäß den Schritten $\alpha$ und $\beta$ aktivierte Katalysator-Starter-Mischung in einem anderen Reaktionsbehältnis (beispielsweise einem Rührkessel, Rohrreaktor oder Schlaufenreaktor) weiter mit Alkylenoxiden und Kohlendioxid umgesetzt. In einer weiteren bevorzugten Ausführungsform wird die gemäß dem Schritt $\alpha$ getrocknete Katalysator-Starter-Mischung in einem anderen Reaktionsbehältnis (beispielsweise einem Rührkessel, Rohrreaktor oder Schlaufenreaktor) gemäß den Schritten $\beta$ und $\gamma$ mit Alkylenoxiden und Kohlendioxid umgesetzt.

Bei Reaktionsführung in einem Rohrreaktor werden die gemäß dem Schritt $\alpha$ getrocknete Katalysator-Starter-Mischung oder die gemäß den Schritten $\alpha$ und $\beta$ aktivierte Katalysator-Starter-Mischung und gegebenenfalls weiterer Starter sowie Alkylenoxide und Kohlendioxid kontinuierlich durch ein Rohr gepumpt. Bei Verwendung einer gemäß dem Schritt $\alpha$ getrockneten Katalysator-Starter-Mischung erfolgt die Aktivierung gemäß Schritt $\beta$ im ersten Teil des Rohrreaktors und die Copolymerisation gemäß Schritt $\beta$ im zweiten Teil des Rohrreaktors. Die molaren Verhältnisse der Reaktionspartner variieren je nach gewünschtem Polymer. In einer bevorzugten Ausführungsform wird hierbei Kohlendioxid in seiner flüssigen oder überkritischen Form zudosiert, um eine optimale Mischbarkeit der Komponenten zu ermöglichen. Das Kohlendioxid kann am Eingang des Reaktors und/oder über Dosierstellen, die entlang dem Reaktor angeordnet sind, in dem Reaktor eingebracht werden. Eine Teilmenge des Epoxids kann am Eingang des Reaktors eingebracht werden. Die Restmenge des Epoxids wird bevorzugt über mehrere Dosierstellen, die entlang dem Reaktor angeordnet

sind, in den Reaktor eingebracht. Vorteilhafterweise werden Mischelemente zur besseren Durchmischung der Reaktionspartner eingebaut, wie sie zum Beispiel von der Firma Ehrfeld Mikrotechnik BTS GmbH vertrieben werden, oder Mischer-Wärmetauscherelemente, die gleichzeitig die Durchmischung und Wärmeabfuhr verbessern. Bevorzugt wird durch die Mischelemente zudosiertes $CO_2$ und/oder Alkylenoxid mit der Reaktionsmischung vermischt. In einer alternativen Ausführungsform werden verschiedene Volumenelemente der Reaktionsmischung miteinander vermischt.

Schlaufenreaktoren können ebenfalls zur Herstellung von Polyethercarbonatpolyolen verwendet werden. Hierunter fallen im Allgemeinen Reaktoren mit interner und/oder externer Stoffrückführung (ggf. mit im Kreislauf angeordneten Wärmetauscherflächen), wie beispielsweise ein Strahlschlaufenreaktor, Jet-Loop Reaktor oder Venturi-Loop Reaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren oder mehreren hintereinander geschalteten Rührkesseln.

Um vollständigen Umsatz zu realisieren, ist dem Reaktionsapparat, in dem der Schritt $\gamma$ durchgeführt wird, häufig ein weiterer Kessel oder ein Rohr ("Verweilrohr") nachgeschaltet, in dem nach der Reaktion vorhandene Restkonzentrationen freier Alkylenoxide abreagieren. Bevorzugt liegt der Druck in diesem nachgeschalteten Reaktor bei demselben Druck wie in dem Reaktionsapparat, in dem der Reaktionsschritt $\gamma$ durchgeführt wird. Der Druck in dem nachgeschalteten Reaktor kann jedoch auch höher oder niedriger gewählt werden. In einer weiteren bevorzugten Ausführungsform wird das Kohlendioxid nach dem Reaktionsschritt $\gamma$ ganz oder teilweise abgelassen und der nachgeschaltete Reaktor bei Normaldruck oder einem geringen Überdruck betrieben. Die Temperatur in dem nachgeschalteten Reaktor liegt bevorzugt bei 10 bis 150°C und bevorzugt bei 20 bis 100°C. Das Reaktionsgemisch enthält am Ende des nachgeschalteten Reaktor vorzugsweise weniger als 0,05 Gew.-% Alkylenoxid.

Die erfindungsgemäß erhaltenen Polyethercarbonatpolyole haben vorzugsweise eine OH-Funktionalität (d.h. durchschnittlich Anzahl von OH-Gruppen pro Molekül), welche von der von mindestens 0,8, bevorzugt von 1 bis 8, besonders bevorzugt von 1 bis 6 und ganz besonders bevorzugt von 2 bis 4. Das Molekulargewicht der erhaltenen Polyethercarbonatpolyole beträgt mindestens 400, bevorzugt 400 bis 1000000 g/mol und besonders bevorzugt 500 bis 60000 g/mol.

Allgemein können für das erfindungsgemäße Verfahren **Alkylenoxide** (Epoxide) mit 2-45 Kohlenstoffatomen eingesetzt werden. Bei den Alkylenoxiden mit 2-45 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyoxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropyl-methyl-dimethoxysilan, 3-Glycidyloxypropylethyldiethoxysilan, 3-Glycidyloxypropyltrlisopropoxysilan. Vorzugsweise werden als Alkylenoxide Ethylenoxid und/oder Propylenoxid, insbesondere Propylenoxid eingesetzt.

Als geeignete **H-funktionelle Starterverbindungen** können Verbindungen mit für die Alkoxylierung aktiven H-Atomen eingesetzt werden. Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $-NH_2$ , besonders bevorzugt ist -OH. Als H-funktionelle Startersubstanz wird beispielsweise eine oder mehrere Verbindungen ausgewählt aus der Gruppe bestehend aus ein- oder mehrwertige Alkohole, mehrwertige Amine, mehrwertige Thiole, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z. B. sogenannte Jeffamine® von Huntsman, wie z. B. D-230, D-400, D-2000, T-403, T-3000, T-5000 oder entsprechende Produkte der BASF, wie z. B.

Polyetheramin D230, D400, D200, T403, T5000), Polytetrahydrofurane (z. B. PolyTHF® der BASF, wie z. B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Monooder Diglycerid von Ricinolsäure, Monoglyceride von Fettsäuren, chemisch modifizierte Mono-, Diund/oder Triglyceride von Fettsäuren, und $C_1$-$C_{24}$ Alkyl-Fettsäureester, die im Mittel mindestens 2 OH-Gruppen pro Molekül enthalten, eingesetzt. Beispielhaft handelt es sich bei den $C_1$-$C_{24}$ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, *tert*-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-*tert*-Butoxy-2-propanol., 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, *tert*-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an ε-Caprolacton.

Die H-funktionellen Startersubstanzen können auch aus der Substanzklasse der Polyetherpolyole ausgewählt sein, insbesondere solchen mit einem Molekulargewicht $M_n$ im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®- Baygal®-, PET®- und Polyether-Polyole der Bayer MaterialScience AG (wie z. B. Desmophen® 3600Z, Desmophen® 1900U, Acclaim® Polyol 2200, Acclaim® Polyol 40001, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Startersubstanzen können auch aus der Substanzklasse der Polyesterpolyole ausgewählt sein, insbesondere solchen mit einem Molekulargewicht $M_n$ im Bereich von 200 bis 4500 g/mol. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydride eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyethercarbonatpolyole dienen können. Bevorzugt werden Polyetherpolyole mit $M_n$ = 150 bis 2000 g/mol zur Herstellung der Polyesteretherpolyole eingesetzt.

Des weiteren können als H-funktionelle Startersubstanzen Polycarbonatdiole eingesetzt werden, insbesondere solche mit einem Molekulargewicht $M_n$ im Bereich von 150 bis 4500 g/mol, vorzugsweise 500 bis 2500, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177. Beispielsweise können als Polycarbonatdiole die Desmophen® C-Typen der Bayer MaterialScience AG verwendet werden, wie z. B. Desmophen® C 1100 oder Desmophen® C 2200.

In einer weiteren Ausführungsform der Erfindung können Polyethercarbonatpolyole als H-funktionelle Startersubstanzen eingesetzt werden. Insbesondere werden Polyethercarbonatpolyole, die nach dem hier beschriebenen erfindungsgemäßen Verfahren erhältlich sind, eingesetzt. Diese als H-funktionelle Startersubstanzen eingesetzten Polyethercarbonatpolyole werden hierzu in einem separaten Reaktionsschritt zuvor hergestellt.

Die H-funktionellen Startersubstanzen weisen im Allgemeinen eine OH-Funktionalität (d.h. Anzahl an für die Polymerisation aktiven H-Atomen pro Molekül) von 1 bis 8, bevorzugt von 2 bis 6 und besonders bevorzugt von 2 bis 4 auf. Die H-funktionellen Startersubstanzen werden entweder einzeln oder als Gemisch aus mindestens zwei H-funktionellen Startersubstanzen eingesetzt.

Bevorzugte H-funktionelle Startersubstanzen sind Alkohole der allgemeinen Formel (II),

$$HO-(CH_2)_x-OH \quad (II)$$

wobei x eine Zahl von 1 bis 20, bevorzugt eine gerade Zahl von 2 bis 20 ist. Beispiele für Alkohole gemäß Formel (II) sind Ethylenglycol, 1,4-Butandiol, 1,6-Hexandiol, 1,8-Octandiol, 1,10 Decandiol und 1,12-Dodecandiol. Weitere bevorzugte H-funktionelle Startersubstanzen sind Neopentylglykol, Trimethylolpropan, Glycerin, Pentaerythrit, Umsetzungsprodukte der Alkohole gemäß Formel (II) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Starterverbindungen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Starterverbindung und Propylenoxid bzw. einer di- oder tri-H-funktionellen Starterverbindung, Propylenoxid und Ethylenoxid aufgebaut ist. Die Polyetherpolyole haben bevorzugt eine OH-Funktionalität von 2 bis 4 und ein Molekulargewicht $M_n$ im Bereich von 62 bis 4500 g/mol und insbesondere ein Molekulargewicht $M_n$ im Bereich von 62 bis 3000 g/.

Die Herstellung der Polyethercarbonatpolyole erfolgt durch katalytische Anlagerung von Kohlendioxid und Alkylenoxiden an H-funktionellen Startersubstanzen. Unter "H-funktionell" wird im Sinne der Erfindung die Anzahl an für die Alkoxylierung aktiven H-Atomen pro Molekül der Starterverbindung verstanden.

DMC-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyethercarbonatpolyolen bei sehr geringen Katalysatorkonzentrationen. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. *tert*-Butanol) noch einen Polyether mit einem zahlenmittlerem Molekulargewicht größer als 500 g/mol enthalten.

Die erfindungsgemäßen DMC-Katalysatoren werden vorzugsweise erhalten, indem man

(a) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,
(b) wobei im zweiten Schritt der Feststoff aus der aus (i) erhaltenen Suspension durch bekannte Techniken (wie Zentrifugation oder Filtration) abgetrennt wird,
(c) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),
(d) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den erfindungsgemäßen DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise wird eine wässrige Lösung von Zinkchlorid (bevorzugt im Überschuss bezogen auf das Metallcyanidsalz wie beispielsweise Kaliumhexacyanocobaltat) und Kaliumhexacyanocobaltat gemischt und anschließend Dimethoxyethan (Glyme) oder *tert*-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze besitzen bevorzugt die allgemeine Formel (III),

$$M(X)_n \quad (III)$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat ist und
n ist 2, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (IV),

$$M_r(X)_3 \qquad (IV)$$

wobei

M ausgewählt ist aus den Metallkationen $Fe^{3+}$, $Al^{3+}$, $Co^{3+}$ und $Cr^{3+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalat ist und
r ist 1, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (V),

$$M(X)_s \qquad (V)$$

wobei

M ausgewählt ist aus den Metallkationen $Mo^{4+}$, $V^{4+}$ und $W^{4+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (VI),

$$M(X)_t \qquad (VI)$$

wobei

M ausgewählt ist aus den Metallkationen $Mo^{6+}$ und $W^{6+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat ist und
t ist 6, wenn X = Halogenid, Hydroxid, Carboxylat, Cyanat, Thiocyanat, Isocyanat, Isothiocyanat oder Nitrat ist,

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.
Zur Herstellung der Doppelmetallcyanid-Verbindungen geeignete Metallcyanidsalze besitzen bevorzugt die allgemeine Formel (VII)

$$(Y)_a\, M'(CN)_b\, (A)_c \qquad (VII)$$

wobei

M' ausgewählt ist aus einem oder mehreren Metallkationen der Gruppe bestehend aus Fe(II), Fe(III), Co(II), Co(III),

Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. $Li^+$, $Na^+$, $K^+$, $Rb^+$)und Erdalkalimetall (d.h. $Be^{2+}$, $Mg^{2+}$, $Ca^{2+}$, $Sr^{2+}$, $Ba^{2+}$),
A ausgewählt ist aus einem oder mehreren Anionen der Gruppe bestehend aus Halogenide (d..h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calciumhexacyanocobaltat(III) und Lithiumhexacyanocobaltat(III).
Bevorzugte Doppelmetallcyanid-Verbindungen, die in den erfindungsgemäßen DMC-Katalysatoren enthalten sind, sind Verbindungen der allgemeinen Formel (VIII)

$$M_x[M'_{x'}(CN)_y]_z \qquad \text{(VIII),}$$

worin M wie in Formel (II) bis (VI) und

M' wie in Formel (VII) definiert ist, und
x, x', y und z sind ganzzahlig und so gewählt, dass die Elektronenneutralität der Doppelmetallcyanidverbindung gegeben ist.

Vorzugsweise ist

x=3, x'=1, y=6 und z=2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zinkhexacyanoiridat (III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).
Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, *tert*-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-*tert*-butylether, Diethylenglykol-mono-*tert*-butylether, Tripropylenglykol-mono-methylether und 3-Methyl-3-oxetanmethanol). Höchst bevorzugte organische Komplexliganden sind ausgewählt aus einer oder mehrerer Verbindungen der Gruppe bestehend aus Dimethoxyethan, *tert*-Butanol 2-Methyl-3-buten-2-ol, 2-Methyl-3-butin-2-ol, Ethylenglykol-mono-*tert*-butylether und 3-Methyl-3-oxetanmethanol.
Optional werden bei der Herstellung der erfindungsgemäßen DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische oberflächen- bzw. grenzflächenaktiven Verbindungen eingesetzt.
Bevorzugt werden bei der Herstellung der erfindungsgemäßen DMC-Katalysatoren im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz, also mindestens ein molares Verhältnis von Metallsalz zu Metallcyanidsalz von 2,25 zu 1,00) und des Metallcyanidsalzes (z.B. Kaliumhexacyanocobaltat) in Gegenwart des organischen Komplexliganden (z.B. *tert*-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der DoppelmetallcyanidVerbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung weitere komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen.Vorzugsweise wird in einem ersten Waschschritt (iii-1) mit einer wässrigen Lösung des ungesättigten Alkohols gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäßen Katalysator zu entfernen. Besonders bevorzugt liegt die Menge des ungesättigten Alkohols in der wässrigen Waschlösung zwischen 40 und 80 Gew.-%, bezogen auf die Gesamtlösung des ersten Waschschritts. In den weiteren Waschschritten (iii-2) wird entweder der erste Waschschritt einmal oder mehrmals, vorzugsweise einmal bis dreimal wiederholt, oder vorzugsweise wird eine nichtwässrige Lösung, wie z.B. eine Mischung oder Lösung aus ungesättigtem Alkohol und weiterer komplexbildender Komponente (bevorzugt im Bereich zwischen 0,5 und 5 Gew.-%, bezogen auf die Gesamtmenge der Waschlösung des Schrittes (iii-2)), als Waschlösung eingesetzt und der Feststoff damit einmal oder mehrmals, vorzugsweise einmal bis dreimal gewaschen.

Der isolierte und gegebenenfalls gewaschene Feststoff wird anschließend, gegebenenfalls nach Pulverisierung, bei Temperaturen von im allgemeinen 20 - 100°C und bei Drücken von im Allgemeinen 0,1 mbar bis Normaldruck (1013 mbar) getrocknet.

Ein bevorzugtes Verfahren zur Isolierung der erfindungsgemäßen DMC-Katalysatoren aus der Suspension durch Filtration, Filterkuchenwäsche und Trocknung wird in WO-A 01/80994 beschrieben.

Die nach dem erfindungsgemäßen Verfahren erhältlichen Polyethercarbonatpolyole können problemlos verarbeitet werden, insbesondere durch Umsetzung mit Di- und/oder Polyisocyanaten zu Polyurethanen, insbesondere Polyurethan-Weichschaumstoffen. Für Polyurethananwendungen werden vorzugsweise Polyethercarbonatpolyole eingesetzt, die auf einer H-funktionellen Starterverbindung basieren, welche eine Funktionalität von mindestens 2 besitzt. Des Weiteren können die nach dem erfindungsgemäßen Verfahren erhältlichen Polyethercarbonatpolyole in Anwendungen wie Wasch- und Reinigungsmittelformulierungen, Bohrflüssigkeiten, Kraftstoffadditiven, ionischen und nichtionischen Tensiden, Schmiermitteln, Prozesschemikalien für die Papier- oder Textilherstellung oder kosmetischen Formulierungen verwendet werden. Dem Fachmann ist bekannt, dass abhängig vom jeweiligen Anwendungsgebiet die zu verwendenden Polyethercarbonatpolyole gewisse Stoffeigenschaften wie beispielsweise Molekulargewicht, Viskosität, Funktionalität und/oder Hydroxylzahl erfüllen müssen.

**Beispiele**

Eingesetzte H-funktionelle Starterverbindungen (Starter):

PET-1 difunktionelles Poly(oxypropylen)polyol mit einer OH-Zahl von 112 $mg_{KOH}/g$
PET-2 difunktionelles Poly(oxypropylen)polyol mit einer OH-Zahl von 261 $mg_{KOH}/g$
PET-3 trifunktionelles Poly(oxypropylen)polyol mit einer OH-Zahl von 400 $mg_{KOH}/g$

Der DMC-Katalysator wurde hergestellt nach Beispiel 6 von WO-A 01/80994.

Der in den Beispielen eingesetzte 300 ml Druckreaktor hatte eine Höhe (innen) von 10,16 cm und einen Innendurchmesser von 6,35 cm. Der Reaktor war ausgestattet mit einem elektrischen Heizmantel (510 Watt maximale Heizleistung). Die Gegenkühlung bestand in einem U-förmig gebogenen Tauchrohr mit 6 mm Außendurchmesser, das bis 5 mm über den Boden in den Reaktor ragte und das mit Kühlwasser von ca. 10°C durchströmt wurde. Der Wasserstrom wurde über ein Magnetventil ein- und ausgeschaltet. Weiterhin war der Reaktor mit einem Einleitrohr sowie einem Thermofühler mit 1,6 mm Durchmesser ausgestattet, die bis 3 mm über den Boden in den Reaktor ragten.

Die Heizleistung des elektrischen Heizmantels lag während der Aktivierung [Schritt (β)] im Durchschnitt bei ca. 20% der maximalen Heizleistung. Durch die Regelung schwankte die Heizleistung um ±5% der maximalen Heizleistung. Das Auftreten einer erhöhten Wärmeentwicklung im Reaktor, hervorgerufen durch die rasche Umsetzung von Propylenoxid während der Aktivierung des Katalysators [Schritt (β)] wurde beobachtet über eine reduzierte Wärmeleistung des Heizmantels, Einschalten der Gegenkühlung und gegebenenfalls einen Temperaturanstieg im Reaktor. Das Auftreten einer Wärmeentwicklung im Reaktor, hervorgerufen durch die kontinuierliche Umsetzung von Propylenoxid während der Reaktion [Schritt (γ)] führte zu einem Absenken der Leistung des Heizmantels auf ca. 8% der maximalen Heizleistung. Durch die Regelung schwankte die Heizleistung um ±5% der maximalen Heizleistung.

Bei dem in den Beispielen eingesetzten Hohlwellenrührer handelte es sich um einen Hohlwellenrührer, bei dem das Gas über eine hohle Welle des Rührers in die Reaktionsmischung eingeleitet wurde. Der auf der Hohlwelle angebrachte Rührkörper wies vier Arme auf mit einem Durchmesser von 35 mm und eine Höhe von 14 mm. An jedem Ende des Arms waren zwei Gasauslässe angebracht, die einen Durchmesser von 3 mm aufwiesen. Durch die Drehung des Rührers entstand ein Unterdruck derart, dass das über der Reaktionsmischung befindliche Gas ($CO_2$ und ggf. Alkylenoxid) abgesaugt wurde und über die Hohlwelle des Rührers in die Reaktionsmischung eingeleitet wurde.

Bei dem in den Beispielen eingesetzten Impeller-Rührer handelte es sich um eine Schrägblatt-Turbine, bei dem auf der Rührwelle im Abstand von 7 mm insgesamt zwei Rührstufen mit jeweils vier Rührflügeln (45°) angebracht waren, die einen Durchmesser von 35 mm und eine Höhe von 10 0 mm aufwiesen.

Bei der Copolymerisation resultierte neben dem cyclischen Propylencarbonat das Polyethercarbonatpolyol, welches einerseits in Formel (IXa) gezeigte Polycarbonat-Einheiten enthält,

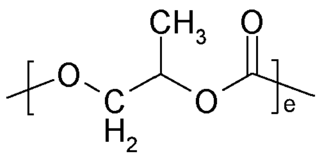 bzw. 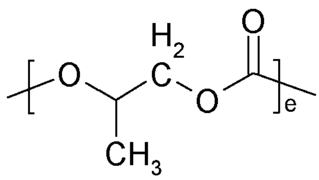 (IXa)

und andererseits in Formel (IXb) gezeigte Polyether-Einheiten enthält.

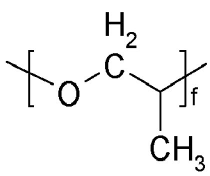 bzw. 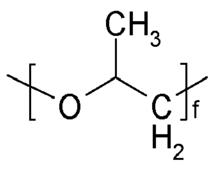 (IXb)

Die Charakterisierung des Reaktionsgemisches erfolgte durch $^1$H-NMR Spektroskopie und Gelpermeations-Chromatographie:

Das Verhältnis der Menge an cyclischem Propylencarbonat zu Polyethercarbonatpolyol (Selektivität) und das molare Verhältnis von Carbonatgruppen zu Ethergruppen im Polyethercarbonatpolyol (Verhältnis e/f) sowie der Anteil des umgesetzten Propylenoxids (C in mol%) wurden mittels $^1$H-NMR Spektroskopie bestimmt. Die Probe wurde jeweils in deuteriertem Chloroform gelöst und auf einem Spektrometer der Firma Bruker (AV400, 400 MHz) vermessen. Die relevanten Resonanzen im $^1$H-NMR Spektrum (bezogen auf TMS = 0 ppm), die zur Integration verwendet wurden, sind wie folgt:

I1: 1,11 - 1,17: Methylgruppe der Polyether-Einheiten, Fläche der Resonanz entspricht drei H Atomen
12: 1,25 - 1,32: Methylgruppe der Polycarbonat-Einheiten, Fläche der Resonanz entspricht drei H Atomen
I3: 1,45 - 1,49: Methylgruppe des cyclischen Carbonats, Fläche der Resonanz entspricht drei H Atomen
14: 2,95 - 2,99: CH Gruppe für freies, nicht abreagiertes Propylenoxid, Fläche der Resonanz entspricht einem H Atom

Angegeben sind das molare Verhältnis der Menge an cyclischem Propylencarbonat zu Carbonat-Einheiten im Polyethercarbonatpolyol (Selektivität, g/e) und das molare Verhältnis von Carbonatgruppen zu Ethergruppen im Polyethercarbonatpolyol (e/f) sowie der Anteil des umgesetzten Propylenoxids (C in mol%).
Unter Berücksichtigung der relativen Intensitäten wurden die Werte wie folgt berechnet:
Molares Verhältnis der Menge an cyclischem Propylencarbonat zu Carbonat-Einheiten im Polyethercarbonatpolyol (Selektivität, g/e):

$$g/e = I3 / I2 \qquad (X)$$

Molares Verhältnis von Carbonatgruppen zu Ethergruppen im Polymer (e/f):

$$e/f = I2 / I1 \qquad (XI)$$

Der molare Anteil des umgesetzten Propylenoxids (C in mol%) bezogen auf die Summe der bei der Aktivierung und der Copolymerisation eingesetzten Menge an Propylenoxid, berechnet sich nach der Formel:

$$C = [((I1/3)+(I2/3)+(I3/3)) / ((I1/3)+(I2/3)+(I3/3)+I4)] * 100\% \qquad (XII)$$

und lag bei den Beispielen zwischen 97,8 und >99,9%.
Das Zahlenmittel $M_n$ und das Gewichtsmittel $M_w$ des Molekulargewichts der entstandenen Polymere wurde mittels Gelpermeations-Chromatographie (GPC) bestimmt. Es wurde vorgegangen nach DIN 55672-1: "Gelpermeationschromatographie, Teil 1 - Tetrahydrofuran als Elutionsmittel" (SECurity GPC-System von PSS Polymer Service, Flussrate 1.0 ml/min; Säulen: 2xPSS SDV linear M, 8×300 mm, 5 μm; RID-Detektor). Dabei wurden Polystyrolproben bekannter Molmasse zur Kalibrierung verwendet.
Die OH-Zahl (Hydroxylzahl) wurde in Anlehnung an DIN 53240-2 bestimmt, wobei jedoch N-Methylpyrrolidon anstelle von THF/Dichlormethan als Lösemittel verwendet wurde. Es wurde mit 0,5 molarer ethanolischer KOH Lösung titriert (Endpunktserkennung mittels Potentiometrie). Als Prüfsubstanz diente Rizinusöl mit durch Zertifikat festgelegter OH-Zahl. Die Angabe der Einheit in "mg/g" bezieht sich auf mg[KOH]/g[Polyethercarbonatpolyol].
Die folgenden Beispiele 1 bis 6 wurden mit PET-1 als Starter durchgeführt. Die Angaben zum Druck beziehen sich auf den absoluten Druck.

**Beispiel 1: Polymerisation von Propylenoxid und $CO_2$ mit einem unter Argon getrockneten und unter $CO_2$-Atmosphäre aktivierten DMC Katalysator**

In einem 300 ml Druckreaktor ausgestattet mit Hohlwellenrührer wurde eine Mischung aus DMC-Katalysator (23,8 mg) und PET-1 (30 g) vorgelegt. Der Reaktor wurde geschlossen und für fünf Minuten wurde der Druck im Reaktor auf 5 mbar reduziert. Anschließend wurde durch Anlegen eines leichten Ar-Stroms und gleichzeitigem Entfernen des Gases mit einer Pumpe der Druck im Reaktor auf 50 mbar geregelt. Der Reaktor wurde auf 130°C aufgeheizt und die Mischung für 30 min bei 130°C unter reduziertem Druck (50 mbar) und leichtem Ar-Strom gerührt (1500 U/min) [Schritt (α)]. Es wurden 15 bar $CO_2$ aufgepresst, wodurch die Temperatur im Reaktor leicht absank. Die Temperatur wurde auf 130°C nachgeregelt und während der nachfolgenden Schritte der Druck im Reaktor durch Nachdosieren von $CO_2$ bei 15 bar gehalten. Es wurden 3 g Propylenoxid mit Hilfe einer HPLC-Pumpe (1,5 mL/min) zu dosiert und die Reaktionsmischung für 20 min gerührt (1500 U/min). Anschließend wurden noch zwei weitere mal 3 g Propylenoxid mit Hilfe der HPLC-Pumpe (1,5 ml/min) zudosiert und die Reaktionsmischung für jeweils 20 min gerührt (1500 U/min). Das Auftreten einer kurzzeitig erhöhten Wärmeentwicklung im Reaktor während dieser Zeit bestätigte die Aktivierung des Katalysators [Schritt (β)]. Nach Abkühlen auf 100°C wurden unter Rühren weitere 81 g Propylenoxid über eine HPLC-Pumpe (1,5 mL/min) zudosiert, wobei die Reaktionsmischung weiterhin gerührt wurde (1500 U/min). Insgesamt wurde ab Beginn der Zugabe von Propylenoxid 3 h bei 100°C gerührt [Schritt (γ)]. Durch anschließendes Abkühlen der Reaktionsmischung auf Raumtemperatur wurde die Reaktion beendet, der Überdruck wurde abgelassen und das resultierende Produkt analysiert.
Die NMR-spektroskopische Untersuchung des Reaktionsgemisches zeigte einen vollständigen Umsatz des Propylenoxids.
Die Selektivität g/e betrug 0,06.
Das molare Verhältnis von Carbonatgruppen zu Ethergruppen im Polyethercarbonatpolyol e/f betrug 20,1/79,9.

Das erhaltene Polyethercarbonatpolyol wies ein Molekulargewicht $M_n$ = 5756 g/mol, $M_w$ = 13076 g/mol und eine Polydispersität von 2,27 auf.
Die OH Zahl des erhaltenen Gemisches war 26,6 $mg_{KOH}$/g.

**Beispiel 2: Polymerisation von Propylenoxid und $CO_2$ mit einem unter $CO_2$-Atmosphäre getrockneten und unter $CO_2$-Atmosphäre aktivierten DMC Katalysator**

In einem 300 ml Druckreaktor ausgestattet mit Hohlwellenrührer wurde eine Mischung aus DMC-Katalysator (23,8 mg) und PET-1 (30 g) vorgelegt. Der Reaktor wurde geschlossen und für fünf Minuten wurde der Druck im Reaktor auf 5 mbar reduziert. Anschließend wurde durch Anlegen eines leichten $CO_2$-Stroms und gleichzeitigem Entfernen des Gases mit einer Pumpe der Druck im Reaktor auf 50 mbar geregelt. Der Reaktor wurde auf 130°C aufgeheizt und die Mischung für 30 min bei 130°C unter reduziertem Druck (50 mbar) und leichtem $CO_2$-Strom gerührt (1500 U/min) [Schritt ($\alpha$)]. Es wurden 15 bar $CO_2$ aufgepresst, wodurch die Temperatur im Reaktor leicht absank. Die Temperatur wurde auf 130°C nachgeregelt und während der nachfolgenden Schritte der Druck im Reaktor durch Nachdosieren von $CO_2$ bei 15 bar gehalten. Es wurden 3 g Propylenoxid mit Hilfe einer HPLC-Pumpe (1,5 mL/min) zudosiert und die Reaktionsmischung für jeweils 20 min gerührt (1500 U/min). Anschließend wurden noch zwei weitere mal 3 g Propylenoxid mit Hilfe der HPLC-Pumpe (1,5 ml/min) zudosiert und die Reaktionsmischung für 20 min gerührt (1500 U/min) [Schritt ($\beta$)]. Nach Abkühlen auf 100°C wurden unter Rühren weitere 81 g Propylenoxid über eine HPLC-Pumpe (1,5 mL/min) zudosiert, wobei die Reaktionsmischung weiterhin gerührt wurde (1500 U/min). Insgesamt wurde ab Beginn der Zugabe von Propylenoxid 3 h bei 100°C gerührt [Schritt ($\gamma$)]. Durch anschließendes Abkühlen der Reaktionsmischung auf Raumtemperatur wurde die Reaktion beendet, der Überdruck wurde abgelassen und das resultierende Produkt analysiert.
Die NMR-spektroskopische Untersuchung des Reaktionsgemisches zeigte einen vollständigen Umsatz des Propylenoxids.
Die Selektivität g/e betrug 0,07.
Das molare Verhältnis von Carbonatgruppen zu Ethergruppen im Polyethercarbonatpolyol e/f betrug 20,5/79,5.
Das erhaltene Polyethercarbonatpolyol wies ein Molekulargewicht $M_n$ = 6730 g/mol, $M_w$ = 15686 g/mol und eine Polydispersität von 2,33 auf.
Die OH Zahl des erhaltenen Gemisches war 25,1 $mg_{KOH}$/g.

**Vergleichsbeispiel 3: Polymerisation von Propylenoxid und $CO_2$ mit einem ohne $CO_2$ getrockneten und ohne $CO_2$ aktivierten DMC Katalysator**

In einem 300 ml Druckreaktor ausgestattet mit Hohlwellenrührer wurde eine Mischung aus DMC-Katalysator (23,8 mg) und PET-1 (30 g) vorgelegt. Der Reaktor wurde geschlossen und für fünf Minuten wurde der Druck im Reaktor auf 5 mbar reduziert. Anschließend wurde durch Anlegen eines leichten Ar-Stroms und gleichzeitigem Entfernen des Gases mit einer Pumpe der Druck im Reaktor auf 50 mbar (absolut) geregelt. Der Reaktor wurde auf 130°C aufgeheizt und die Mischung für 30 min bei 130°C unter leichtem Vakuum (50 mbar) und leichtem Ar-Strom gerührt (1500 U/min) [Schritt ($\alpha$)]. Es wurden 2,5 bar Argon aufgepresst. Anschließend wurden 3 g Propylenoxid mit Hilfe einer HPLC-Pumpe (1,5 mL/min) zu dosiert und die Reaktionsmischung für jeweils 20 min gerührt (1500 U/min). Anschließend wurden noch zwei weitere mal 3 g Propylenoxid mit Hilfe der HPLC-Pumpe (1,5 ml/min) zudosiert und die Reaktionsmischung für 20 min gerührt (1500 U/min). [Schritt ($\beta$)]. Nach Abkühlen auf 100°C wurden der Argon-Druck abgelassen und 15 bar $CO_2$ aufgepresst. Während der nachfolgenden Schritte wurde der Druck im Reaktor durch Nachdosieren von $CO_2$ bei 15 bar gehalten. Unter Rühren wurden weitere 81 g Propylenoxid über eine HPLC-Pumpe (1,5 mL/min) zudosiert, wobei die Reaktionsmischung weiterhin gerührt wurde (1500 U/min). Insgesamt wurde ab Beginn der Zugabe von Propylenoxid 3 h bei 100°C gerührt [Schritt ($\gamma$)]. Durch anschließendes Abkühlen der Reaktionsmischung auf Raumtemperatur wurde die Reaktion beendet, der Überdruck wurde abgelassen und das resultierende Produkt analysiert.
Die NMR-spektroskopische Untersuchung des Reaktionsgemisches zeigte einen vollständigen Umsatz des Propylenoxids.
Die Selektivität g/e betrug 0,08.
Das molare Verhältnis von Carbonatgruppen zu Ethergruppen im Polyethercarbonatpolyol e/f betrug 18,1/81,9.
Das erhaltene Polyethercarbonatpolyol wies ein Molekulargewicht $M_n$ = 5644 g/mol, $M_w$ = 9576 g/mol und eine Polydispersität von 1,70 auf.
Die OH Zahl des erhaltenen Gemisches war 25,0 $mg_{KOH}$/g.

**Vergleichsbeispiel 4: Polymerisation von Propylenoxid und $CO_2$ mit einem mit $CO_2$ getrockneten und ohne $CO_2$ aktivierten DMC Katalysator**

In einem 300 ml Druckreaktor ausgestattet mit Hohlwellenrührer wurde eine Mischung aus DMC-Katalysator

(23,8 mg) und PET-1 (30 g) vorgelegt. Der Reaktor wurde geschlossen und für fünf Minuten wurde der Druck im Reaktor auf 5 mbar reduziert. Anschließend wurde durch Anlegen eines leichten $CO_2$-Stroms und gleichzeitigem Entfernen des Gases mit einer Pumpe der Druck im Reaktor auf 50 mbar geregelt. Der Reaktor wurde auf 130°C aufgeheizt und die Mischung für 30 min bei 130°C unter leichtem Vakuum (50 mbar) und leichtem $CO_2$-Strom gerührt (1500 U/min). Anschließend wurde der Druck durch Abschalten des $CO_2$-Stroms auf 5 mbar gesenkt [Schritt ($\alpha$)]. Es wurden 2,5 bar Argon aufgepresst. Anschließend wurden 3 g Propylenoxid mit Hilfe einer HPLC-Pumpe (1,5 mL/min) zu dosiert und die Reaktionsmischung für jeweils 20 min gerührt (1500 U/min). Anschließend wurden noch zwei weitere mal 3 g Propylenoxid mit Hilfe der HPLC-Pumpe (1,5 ml/min) zudosiert und die Reaktionsmischung für 20 min gerührt (1500 U/min). [Schritt ($\beta$)]. Nach Abkühlen auf 100°C wurden der Argon-Druck abgelassen und 15 bar $CO_2$ aufgepresst. Während der nachfolgenden Schritte wurde der Druck im Reaktor durch Nachdosieren von $CO_2$ bei 15 bar gehalten. Unter Rühren wurden weitere 81 g Propylenoxid über eine HPLC-Pumpe (1,5 mL/min) zudosiert, wobei die Reaktionsmischung weiterhin gerührt wurde (1500 U/min). Insgesamt wurde ab Beginn der Zugabe von Propylenoxid 3 h bei 100°C gerührt [Schritt ($\gamma$)]. Durch anschließendes Abkühlen der Reaktionsmischung auf Raumtemperatur wurde die Reaktion beendet, der Überdruck wurde abgelassen und das resultierende Produkt analysiert.
Die NMR-spektroskopische Untersuchung des Reaktionsgemisches zeigte einen vollständigen Umsatz des Propylenoxids.
Die Selektivität g/e betrug 0,07.
Das molare Verhältnis von Carbonatgruppen zu Ethergruppen im Polyethercarbonatpolyol e/f betrug 18,5/81,5.
Das erhaltene Polyethercarbonatpolyol wies ein Molekulargewicht $M_n$ = 5905 g/mol, $M_w$ = 10757 g/mol und eine Polydispersität von 1,82 auf.
Die OH Zahl des erhaltenen Gemisches war 25,8 $mg_{KOH}$/g.

**Vergleichsbeispiel 5: Polymerisation von Propylenoxid und $CO_2$ mit einem unter $CO_2$-Atmosphäre aktivierten DMC Katalysator ohne Trocknung**

In einem 300 ml Druckreaktor ausgestattet mit Hohlwellenrührer wurde eine Mischung aus DMC-Katalysator (23,8 mg) und PET-1 (30 g) vorgelegt. Der Reaktor wurde geschlossen, für fünf Minuten wurde der Druck im Reaktor auf 5 mbar reduziert und die Mischung auf 130°C unter Rühren (1500 U/min) aufgeheizt. Es wurde dreimal 2,5 bar Ar aufgepresst, 5 Minuten gerührt und der Überdruck abgelassen [Inertisieren des Reaktors]. Es wurden 15 bar $CO_2$ aufgepresst, wodurch die Temperatur im Reaktor leicht absank. Die Temperatur wurde auf 130°C nachgeregelt und während der nachfolgenden Schritte der Druck im Reaktor durch Nachdosieren von $CO_2$ bei 15 bar gehalten. Anschließend wurden 3 g Propylenoxid mit Hilfe einer HPLC-Pumpe (1,5 mL/min) zudosiert und die Reaktionsmischung für jeweils 20 min gerührt (1500 U/min). Anschließend wurden noch zwei weitere mal 3 g Propylenoxid mit Hilfe der HPLC-Pumpe (1,5 ml/min) zudosiert und die Reaktionsmischung für 20 min gerührt (1500 U/min) [Schritt ($\beta$)]. Nach Abkühlen auf 100°C wurden unter Rühren weitere 81 g Propylenoxid über eine HPLC-Pumpe (1,5 mL/min) zudosiert, wobei die Reaktionsmischung weiterhin gerührt wurde (1500 U/min). Insgesamt wurde ab Beginn der Zugabe von Propylenoxid 3 h bei 100°C gerührt [Schritt ($\gamma$)]. Durch anschließendes Abkühlen der Reaktionsmischung auf Raumtemperatur wurde die Reaktion beendet, der Überdruck wurde abgelassen und das resultierende Produkt analysiert.
Die NMR-spektroskopische Untersuchung des Reaktionsgemisches ergab, dass im Reaktionsgemisch noch unreagiertes Propylenoxid enthalten ist.
Die Selektivität g/e betrug 0,10.
Das molare Verhältnis von Carbonatgruppen zu Ethergruppen im Polyethercarbonatpolyol e/f betrug 19,3/80,7.
Das erhaltene Polyethercarbonatpolyol wies ein Molekulargewicht $M_n$ = 5559 g/mol, $M_w$ = 12051 g/mol und eine Polydispersität von 2,17 auf.
Die OH Zahl des erhaltenen Gemisches war 28,3 $mg_{KOH}$/g.

Tabelle 1: Übersicht der Resultate der Beispiele 1 bis 5

| Beispiel | Trocknung (Schritt $\alpha$) | Aktivierung (Schritt $\beta$) | g/e | e/f | OH Zahl [$mg_{KOH}$/g] |
|---|---|---|---|---|---|
| 1 | ohne $CO_2$ | unter $CO_2$ | 0,06 | 20,1/79,9 | 26,6 |
| 2 | unter $CO_2$ | unter $CO_2$ | 0,07 | 20,5/79,5 | 25,1 |
| 3 (Vgl.) | ohne $CO_2$ | ohne $CO_2$ | 0,08 | 18,1/81,9 | 25,0 |
| 4 (Vgl.) | unter $CO_2$ | ohne $CO_2$ | 0,07 | 18,5/81,5 | 25,8 |

(fortgesetzt)

| Beispiel | Trocknung (Schritt α) | Aktivierung (Schritt β) | g/e | e/f | OH Zahl [$mg_{KOH}$/g] |
|---|---|---|---|---|---|
| 5 (Vgl.) | Inertisieren | unter $CO_2$ | 0,10 | 19,3/80,7 | 28,3 |
| Vgl.: Vergleichsbeispiel | | | | | |

Das Verhältnis e/f ist ein Maß für die Effektivität des Einbaus von Kohlendioxid in die Polymerkette: je größer der Wert dieses Verhältnisses ist, desto höher ist der Anteil des Kohlendioxids im Reaktionsgemisch, der in das Polymer eingebaut wird. Eine Gegenüberstellung des Beispiels 1 mit dem Vergleichsbeispiel 3 zeigt, dass die Aktivierung (Schritt β) unter $CO_2$-Atmosphäre zu einem höheren $CO_2$-Einbau führt und zu einer besseren Selektivität (d.h. niedriges Verhältnis von cyclischem Carbonat zu Polyethercarbonatpolyol). Ebenso zeigt eine Gegenüberstellung des Beispiels 2 mit dem Vergleichsbeispiel 4, dass die Aktivierung (Schritt β) unter $CO_2$-Atmosphäre zu einem höheren $CO_2$-Einbau führt. Eine Gegenüberstellung des Beispiels 1 mit dem Beispiel 2 zeigt, dass die Trocknung (Schritt α) unter Inertgas (Stickstoff) eine weiter verbesserte Selektivität (d.h. niedriges Verhältnis von cyclischem Carbonat zu Polyethercarbonatpolyol) bewirkt.

Eine Gegenüberstellung der Beispiele 1 und 2 mit dem Vergleichsbeispiel 5 zeigt, dass bei einer Aktivierung des DMC Katalysators in Gegenwart von $CO_2$ eine Trocknung bei reduziertem Druck [Schritt (α)] im Vergleich zu einer Inertisierung des Reaktors von Vorteil ist, da im Falle von Vergleichsbeispiel 5 nachteiliger Weise ein Restgehalt an nicht umgesetzten Propylenoxid verbleibt sowie im resultierenden Reaktionsgemisch mehr cyclisches Carbonat enthalten ist und der $CO_2$-Einbau geringer ist.

Die folgenden Beispiele 6 bis 10 wurden mit PET-2 als Starter durchgeführt. Die Angaben zum Druck beziehen sich auf den absoluten Druck.

**Beispiel 6: Polymerisation von Propylenoxid und $CO_2$ mit einem unter Argon getrockneten und unter $CO_2$-Atmosphäre aktivierten DMC Katalysator**

In einem 300 ml Druckreaktor ausgestattet mit Hohlwellenrührer wurde eine Mischung aus DMC-Katalysator (27,9 mg) und PET-2 (30 g) vorgelegt. Der Reaktor wurde geschlossen und für fünf Minuten wurde der Druck im Reaktor auf 5 mbar reduziert. Anschließend wurde durch Anlegen eines leichten Ar-Stroms und gleichzeitigem Entfernen des Gases mit einer Pumpe der Druck im Reaktor auf 50 mbar geregelt. Der Reaktor wurde auf 130°C aufgeheizt und die Mischung für 30 min bei 130°C unter reduziertem Druck (50 mbar) und leichtem Ar-Strom gerührt (1500 U/min) [Schritt (α)]. Es wurden 15 bar $CO_2$ aufgepresst, wodurch die Temperatur im Reaktor leicht absank. Die Temperatur wurde auf 130°C nachgeregelt und während der nachfolgenden Schritte der Druck im Reaktor durch Nachdosieren von $CO_2$ bei 15 bar gehalten. Es wurden 3 g Propylenoxid mit Hilfe einer HPLC-Pumpe (1,5 mL/min) zu dosiert und die Reaktionsmischung für 20 min gerührt (1500 U/min). Anschließend wurden noch zwei weitere mal 3 g Propylenoxid mit Hilfe der HPLC-Pumpe (1,5 ml/min) zudosiert und die Reaktionsmischung für jeweils 20 min gerührt (1500 U/min). Das Auftreten einer kurzzeitig erhöhten Wärmeentwicklung im Reaktor während dieser Zeit bestätigte die Aktivierung des Katalysators [Schritt (β)]. Nach Abkühlen auf 100°C wurden unter Rühren weitere 100,5 g Propylenoxid über eine HPLC-Pumpe (1,5 mL/min) zudosiert, wobei die Reaktionsmischung weiterhin gerührt wurde (1500 U/min). Insgesamt wurde ab Beginn der Zugabe von Propylenoxid 3 h bei 100°C gerührt [Schritt (γ)]. Durch anschließendes Abkühlen der Reaktionsmischung auf Raumtemperatur wurde die Reaktion beendet, der Überdruck wurde abgelassen und das resultierende Produkt analysiert.

Die NMR-spektroskopische Untersuchung des Reaktionsgemisches zeigte einen vollständigen Umsatz des Propylenoxids.

Die Selektivität g/e betrug 0,13.

Das molare Verhältnis von Carbonatgruppen zu Ethergruppen im Polyethercarbonatpolyol e/f betrug 15,9/84,1.

Das erhaltene Polyethercarbonatpolyol wies ein Molekulargewicht $M_n$ = 3036 g/mol, $M_w$ = 4899 g/mol und eine Polydispersität von 1,61 auf.

Die OH Zahl des erhaltenen Gemisches war 56,2 $mg_{KOH}$/g.

**Beispiel 7: Polymerisation von Propylenoxid und $CO_2$ mit einem unter $CO_2$-Atmosphäre getrockneten und unter $CO_2$-Atmosphäre aktivierten DMC Katalysator**

In einem 300 ml Druckreaktor ausgestattet mit Hohlwellenrührer wurde eine Mischung aus DMC-Katalysator (27,9 mg) und PET-2 (30 g) vorgelegt. Der Reaktor wurde geschlossen und für fünf Minuten wurde der Druck im Reaktor auf 5 mbar reduziert. Anschließend wurde durch Anlegen eines leichten $CO_2$-Stroms und gleichzeitigem Entfernen des Gases mit einer Pumpe der Druck im Reaktor auf 50 mbar geregelt. Der Reaktor wurde auf 130°C aufgeheizt und die

Mischung für 30 min bei 130°C unter reduziertem Druck (50 mbar) und leichtem $CO_2$-Strom gerührt (1500 U/min) [Schritt (α)]. Es wurden 15 bar $CO_2$ aufgepresst, wodurch die Temperatur im Reaktor leicht absank. Die Temperatur wurde auf 130°C nachgeregelt und während der nachfolgenden Schritte der Druck im Reaktor durch Nachdosieren von $CO_2$ bei 15 bar gehalten. Es wurden 3 g Propylenoxid mit Hilfe einer HPLC-Pumpe (1,5 mL/min) zudosiert und die Reaktionsmischung für jeweils 20 min gerührt (1500 U/min). Anschließend wurden noch zwei weitere mal 3 g Propylenoxid mit Hilfe der HPLC-Pumpe (1,5 ml/min) zudosiert und die Reaktionsmischung für 20 min gerührt (1500 U/min) [Schritt (β)]. Nach Abkühlen auf 100°C wurden unter Rühren weitere 100,5 g Propylenoxid über eine HPLC-Pumpe (1,5 mL/min) zudosiert, wobei die Reaktionsmischung weiterhin gerührt wurde (1500 U/min). Insgesamt wurde ab Beginn der Zugabe von Propylenoxid 3 h bei 100°C gerührt [Schritt (γ]. Durch anschließendes Abkühlen der Reaktionsmischung auf Raumtemperatur wurde die Reaktion beendet, der Überdruck wurde abgelassen und das resultierende Produkt analysiert.
Die NMR-spektroskopische Untersuchung des Reaktionsgemisches zeigte einen vollständigen Umsatz des Propylenoxids.
Die Selektivität g/e betrug 0,14.
Das molare Verhältnis von Carbonatgruppen zu Ethergruppen im Polyethercarbonatpolyol e/f betrug 15,0/85,0.
Das erhaltene Polyethercarbonatpolyol wies ein Molekulargewicht $M_n$ = 3187 g/mol, $M_w$ = 4770 g/mol und eine Polydispersität von 1,50 auf.
Die OH Zahl des erhaltenen Gemisches war 56,9 $mg_{KOH}$/g.

**Vergleichsbeispiel 8: Polymerisation von Propylenoxid und $CO_2$mit einem ohne $CO_2$ getrockneten und ohne $CO_2$aktivierten DMC Katalysator**

In einem 300 ml Druckreaktor ausgestattet mit Hohlwellenrührer wurde eine Mischung aus DMC-Katalysator (27,9 mg) und PET-2 (30 g) vorgelegt. Der Reaktor wurde geschlossen und für fünf Minuten wurde der Druck im Reaktor auf 5 mbar reduziert. Anschließend wurde durch Anlegen eines leichten Ar-Stroms und gleichzeitigem Entfernen des Gases mit einer Pumpe der Druck im Reaktor auf 50 mbar (absolut) geregelt. Der Reaktor wurde auf 130°C aufgeheizt und die Mischung für 30 min bei 130°C unter leichtem Vakuum (50 mbar) und leichtem Ar-Strom gerührt (1500 U/min) [Schritt (α)]. Es wurden 2,5 bar Argon aufgepresst. Anschließend wurden 3 g Propylenoxid mit Hilfe einer HPLC-Pumpe (1,5 mL/min) zu dosiert und die Reaktionsmischung für jeweils 20 min gerührt (1500 U/min). Anschließend wurden noch zwei weitere mal 3 g Propylenoxid mit Hilfe der HPLC-Pumpe (1,5 ml/min) zudosiert und die Reaktionsmischung für 20 min gerührt (1500 U/min). [Schritt (β)]. Nach Abkühlen auf 100°C wurden der Argon-Druck abgelassen und 15 bar $CO_2$ aufgepresst. Während der nachfolgenden Schritte wurde der Druck im Reaktor durch Nachdosieren von $CO_2$ bei 15 bar gehalten. Unter Rühren wurden weitere 100,5 g Propylenoxid über eine HPLC-Pumpe (1,5 mL/min) zudosiert, wobei die Reaktionsmischung weiterhin gerührt wurde (1500 U/min). Insgesamt wurde ab Beginn der Zugabe von Propylenoxid 3 h bei 100°C gerührt [Schritt (y)]. Durch anschließendes Abkühlen der Reaktionsmischung auf Raumtemperatur wurde die Reaktion beendet, der Überdruck wurde abgelassen und das resultierende Produkt analysiert.
Die NMR-spektroskopische Untersuchung des Reaktionsgemisches zeigte einen vollständigen Umsatz des Propylenoxids.
Die Selektivität g/e betrug 0,16.
Das molare Verhältnis von Carbonatgruppen zu Ethergruppen im Polyethercarbonatpolyol e/f betrug 14,6/85,4.
Das erhaltene Polyethercarbonatpolyol wies ein Molekulargewicht $M_n$ = 3067 g/mol, $M_w$ = 4474 g/mol und eine Polydispersität von 1,46 auf.
Die OH Zahl des erhaltenen Gemisches war 57,9 $mg_{KOH}$/g.

**Vergleichsbeispiel 9: Polymerisation von Propylenoxid und $CO_2$mit einem mit $CO_2$ getrockneten und ohne $CO_2$aktivierten DMC Katalysator**

In einem 300 ml Druckreaktor ausgestattet mit Hohlwellenrührer wurde eine Mischung aus DMC-Katalysator (27,9 mg) und PET-2 (30 g) vorgelegt. Der Reaktor wurde geschlossen und für fünf Minuten wurde der Druck im Reaktor auf 5 mbar reduziert. Anschließend wurde durch Anlegen eines leichten $CO_2$-Stromsund gleichzeitigem Entfernen des Gases mit einer Pumpe der Druck im Reaktor auf 50 mbar geregelt. Der Reaktor wurde auf 130°C aufgeheizt und die Mischung für 30 min bei 130°C unter leichtem Vakuum (50 mbar) und leichtem $CO_2$-Strom gerührt (1500 U/min). Anschließend wurde der Druck durch Abschalten des $CO_2$-Stroms auf 5 mbar gesenkt [Schritt (α)]. Es wurden 2,5 bar Argon aufgepresst. Anschließend wurden 3 g Propylenoxid mit Hilfe einer HPLC-Pumpe (1,5 mL/min) zu dosiert und die Reaktionsmischung für jeweils 20 min gerührt (1500 U/min). Anschließend wurden noch zwei weitere mal 3 g Propylenoxid mit Hilfe der HPLC-Pumpe (1,5 ml/min) zudosiert und die Reaktionsmischung für 20 min gerührt (1500 U/min). [Schritt (β)]. Nach Abkühlen auf 100°C wurden der Argon-Druck abgelassen und 15 bar $CO_2$ aufgepresst. Während der nachfolgenden Schritte wurde der Druck im Reaktor durch Nachdosieren von $CO_2$ bei 15 bar gehalten. Unter Rühren wurden weitere 100,5 g Propylenoxid über eine HPLC-Pumpe (1,5 mL/min) zudosiert, wobei die Reaktionsmischung

weiterhin gerührt wurde (1500 U/min). Insgesamt wurde ab Beginn der Zugabe von Propylenoxid 3 h bei 100°C gerührt [Schritt (γ)]. Durch anschließendes Abkühlen der Reaktionsmischung auf Raumtemperatur wurde die Reaktion beendet, der Überdruck wurde abgelassen und das resultierende Produkt analysiert.
Die NMR-spektroskopische Untersuchung des Reaktionsgemisches zeigte einen vollständigen Umsatz des Propylenoxids.
Die Selektivität g/e betrug 0,15.
Das molare Verhältnis von Carbonatgruppen zu Ethergruppen im Polyethercarbonatpolyol e/f betrug 12,2/87,8.
Das erhaltene Polyethercarbonatpolyol wies ein Molekulargewicht $M_n$ = 3180 g/mol, $M_w$ = 5116 g/mol und eine Polydispersität von 1,61 auf.
Die OH Zahl des erhaltenen Gemisches war 55,5 $mg_{KOH}$/g.

**Vergleichsbeispiel 10: Polymerisation von Propylenoxid und $CO_2$mit einem unter $CO_2$-Atmosphäre aktivierten DMC Katalysator ohne Trocknung**

In einem 300 ml Druckreaktor ausgestattet mit Hohlwellenrührer wurde eine Mischung aus DMC-Katalysator (27,9 mg) und PET-2 (30 g) vorgelegt. Der Reaktor wurde geschlossen, für fünf Minuten wurde der Druck im Reaktor auf 5 mbar reduziert und die Mischung auf 130°C unter Rühren (1500 U/min) aufgeheizt. Es wurde dreimal 2,5 bar Ar aufgepresst, 5 Minuten gerührt und der Überdruck abgelassen [Inertisieren des Reaktors]. Es wurden 15 bar $CO_2$ aufgepresst, wodurch die Temperatur im Reaktor leicht absank. Die Temperatur wurde auf 130°C nachgeregelt und während der nachfolgenden Schritte der Druck im Reaktor durch Nachdosieren von $CO_2$ bei 15 bar gehalten. Anschließend wurden 3 g Propylenoxid mit Hilfe einer HPLC-Pumpe (1,5 mL/min) zudosiert und die Reaktionsmischung für jeweils 20 min gerührt (1500 U/min). Anschließend wurden noch zwei weitere mal 3 g Propylenoxid mit Hilfe der HPLC-Pumpe (1,5 ml/min) zudosiert und die Reaktionsmischung für 20 min gerührt (1500 U/min) [Schritt (β)]. Nach Abkühlen auf 100°C wurden unter Rühren weitere 100,5 g Propylenoxid über eine HPLC-Pumpe (1,5 mL/min) zudosiert, wobei die Reaktionsmischung weiterhin gerührt wurde (1500 U/min). Insgesamt wurde ab Beginn der Zugabe von Propylenoxid 3 h bei 100°C gerührt [Schritt (γ)]. Durch anschließendes Abkühlen der Reaktionsmischung auf Raumtemperatur wurde die Reaktion beendet, der Überdruck wurde abgelassen und das resultierende Produkt analysiert.
Die NMR-spektroskopische Untersuchung des Reaktionsgemisches zeigte einen vollständigen Umsatz des Propylenoxids.
Die Selektivität g/e betrug 0,17.
Das molare Verhältnis von Carbonatgruppen zu Ethergruppen im Polyethercarbonatpolyol e/f betrug 10,6/89,4.
Das erhaltene Polyethercarbonatpolyol wies ein Molekulargewicht $M_n$ = 3048 g/mol, $M_w$ = 5704 g/mol und eine Polydispersität von 1,87 auf.
Die OH Zahl des erhaltenen Gemisches war 57,2 $mg_{KOH}$/g.

Tabelle 2: Übersicht der Resultate der Beispiele 6 bis 10

| Beispiel | Trocknung (Schritt α) | Aktivierung (Schritt β) | g/e | e/f | OH Zahl [$mg_{KOH}$/g] |
|---|---|---|---|---|---|
| 6 | ohne $CO_2$ | unter $CO_2$ | 0,13 | 15,9/84,1 | 56,2 |
| 7 | unter $CO_2$ | unter $CO_2$ | 0,14 | 15,0/85,0 | 56,9 |
| 8 (Vgl.) | ohne $CO_2$ | ohne $CO_2$ | 0,16 | 14,6/85,4 | 57,9 |
| 9 (Vgl.) | unter $CO_2$ | ohne $CO_2$ | 0,15 | 12,2/87,8 | 55,5 |
| 10 (Vgl.) | Inertisieren | unter $CO_2$ | 0,17 | 10,6/89,4 | 57,2 |
| Vgl.: Vergleichsbeispiel | | | | | |

Das Verhältnis e/f ist ein Maß für die Effektivität des Einbaus von Kohlendioxid in die Polymerkette: je größer der Wert dieses Verhältnisses ist, desto höher ist der Anteil des Kohlendioxids im Reaktionsgemisch, der in das Polymer eingebaut wird. Eine Gegenüberstellung des Beispiels 6 mit dem Vergleichsbeispiel 8 zeigt, dass die Aktivierung (Schritt β) unter $CO_2$-Atmosphärezu einem höheren $CO_2$Einbau führt. Ebenso zeigt eine Gegenüberstellung des Beispiels 7 mit dem Vergleichsbeispiel 9, dass die Aktivierung (Schritt β) unter $CO_2$Atmosphäre zu einem höheren $CO_2$ Einbau führt. Eine Gegenüberstellung des Beispiels 6mit dem Beispiel 7 zeigt, dass die Trocknung (Schritt α)unter Inertgas (Stickstoff) eine weitere verbesserte Selektivität (d.h. niedriges Verhältnis von cyclischem Carbonat zu Polyethercarbonatpolyol) bewirkt.
Eine Gegenüberstellung der Beispiele 6 und 7 mit dem Vergleichsbeispiel 10 zeigt, dass bei einer Aktivierung des DMC Katalysators in Gegenwart von $CO_2$ eine Trocknung bei reduziertem Druck [Schritt (α)] im Vergleich zu einer

Inertisierung des Reaktors von Vorteil ist, da im Falle von Vergleichsbeispiel 15 nachteiliger Weise im resultierenden Reaktionsgemisch mehr cyclisches Carbonat enthalten ist und der $CO_2$-Einbau geringer ist.

Das folgende Beispiel 11 wurde mit PET-3 als Starter durchgeführt. Die Angaben zum Druck beziehen sich auf den absoluten Druck.

**Beispiel 11: Polymerisation von Propylenoxid und $CO_2$ mit einem unter Argon getrockneten und unter $CO_2$-Atmosphäre aktivierten DMC Katalysator**

In einem 300 ml Druckreaktor ausgestattet mit Hohlwellenrührer wurde eine Mischung aus DMC-Katalysator (23,6 mg) und PET-3 (12,6 g) vorgelegt und 30 min bei 130°C unter leichtem Vakuum (50 mbar) und leichtem Ar-Strom gerührt (1500 U/min) [Schritt (α)]. Es wurden 15 bar $CO_2$ aufgepresst, wodurch die Temperatur im Reaktor leicht absank. Die Temperatur wurde auf 130°C nachgeregelt und während der nachfolgenden Schritte der Druck im Reaktor durch Nachdosieren von $CO_2$ bei 15 bar gehalten. Es wurden 1,3 g Propylenoxid mit Hilfe einer HPLC-Pumpe (1,5 mL/min) zudosiert und die Reaktionsmischung für 20 min gerührt (1500 U/min). Anschließend wurden noch zwei weitere mal 1,3 g Propylenoxid mit Hilfe der HPLC-Pumpe (1,5 ml/min) zudosiert und die Reaktionsmischung für jeweils 20 min gerührt (1500 U/min). Auftreten einer kurzzeitig erhöhten Wärmeentwicklung im Reaktor während dieser Zeit bestätigte die Aktivierung des Katalysators. [Schritt (β)]. Nach Abkühlen auf 100°C wurden unter Rühren weitere 103,6 g Propylenoxid über eine HPLC-Pumpe (1,5 mL/min) zudosiert, wobei die Reaktionsmischung weiterhin gerührt wurde (1500 U/min). Insgesamt wurde ab Beginn der Zugabe von Propylenoxid 3 h bei 100°C gerührt [Schritt (γ)]. Durch Abkühlen des Reaktors im Eisbad wurde die Reaktion beendet, der Überdruck wurde abgelassen und das resultierende Produkt analysiert.

Ein hot-spot wurde während der Reaktion [Schritt (γ)] nicht beobachtet.

Die NMR-spektroskopische Untersuchung des Reaktionsgemisches zeigte einen vollständigen Umsatz des Propylenoxids.

Die Selektivität g/e betrug 0,18.

Das molare Verhältnis von Carbonatgruppen zu Ethergruppen im Polyethercarbonatpolyol e/f betrug 21,2/73,3.

Das erhaltene Polyethercarbonatpolyol wies ein Molekulargewicht $M_n$ = 5460 g/mol, $M_w$ = 14320 g/mol und eine Polydispersität von 2,62 auf.

Die OH Zahl des erhaltenen Gemisches war 40,6 $mg_{KOH}/g$.

## Patentansprüche

1. Verfahren zur Herstellung von Polyethercarbonatpolyolen aus einer oder mehreren H-funktionellen Starterverbindungen, eines oder mehrerer Alkylenoxiden und Kohlendioxid in Gegenwart eines Doppelmetallcyanid-Katalysators, **dadurch gekennzeichnet, dass**

   (α)

   (α1) in einem Reaktor der DMC-Katalysator und eine oder mehrere H-funktionelle Starterverbindungen vorgelegt werden,
   (α2) durch den Reaktor bei einer Temperatur von 50 bis 200°C ein Inertgas, ein Inertgas-Kohlendioxid-Gemisch oder Kohlendioxid geleitet wird und gleichzeitig durch Entfernen des Inertgases oder Kohlendioxid ein reduzierter Druck (absolut) von 10 mbar bis 800 mbar im Reaktor eingestellt wird,

   (β) zu dem Gemisch aus Schritt (α) unter einer Atmosphäre aus Inertgas-Kohlendioxid-Gemisch oder unter einer Kohlendioxid-Atmosphäre eine Teilmenge (bezogen auf die Gesamtmenge der in den Schritten (β) und (γ) eingesetzten Menge an Alkylenoxiden) von einem oder mehreren Alkylenoxiden bei Temperaturen von 50 bis 200°C zugegeben wird, und
   (γ) ein oder mehrere Alkylenoxide und Kohlendioxid zu der aus Schritt (β) resultierenden Mischung dosiert werden.

2. Verfahren gemäß Anspruch 1, wobei die in Schritt (β) eingesetzte Menge von einem oder mehreren Alkylenoxiden 0,1 bis 25,0 Gew.-% (bezogen auf die im Schritt (α) eingesetzte Menge an Starterverbindung) beträgt.

3. Verfahren zur Aktivierung von DMC-Katalysatoren, **dadurch gekennzeichnet, dass**

   (α)

(α1) in einem Reaktor der DMC-Katalysator und eine oder mehrere H-funktionelle Starterverbindungen vorgelegt werden,
(α2) durch den Reaktor bei einer Temperatur von 50 bis 200°C ein Inertgas, ein Inertgas-Kohlendioxid-Gemisch oder Kohlendioxid geleitet wird und gleichzeitig durch Entfernen des Inertgases oder Kohlendioxid ein reduzierter Druck (absolut) von 10 mbar bis 800 mbar im Reaktor eingestellt wird,

(β) zu dem Gemisch aus Schritt (α) unter einer Atmosphäre aus Inertgas-Kohlendioxid-Gemisch oder unter einer reinen Kohlendioxid-Atmosphäre Alkylenoxid bei Temperaturen von 50 bis 200°C zugegeben wird.

**4.** Verfahren gemäß einem der Ansprüche 1 bis 3, wobei in Schritt (α)

(α1) die H-funktionelle Starterverbindung oder ein Gemisch aus mindestens zwei H-funktionellen Starterverbindungen vorgelegt wird und
(α2) in das resultierende Gemisch aus DMC-Katalysator und einer oder mehrerer H-funktioneller Starterverbindungen bei einer Temperatur von 50 bis 200°C ein Inertgas, ein Inertgas-Kohlendioxid-Gemisch oder Kohlendioxid eingeleitet wird und gleichzeitig durch Entfernen des Inertgases oder Kohlendioxid mit ein reduzierter Druck (absolut) von 10 mbar bis 800 mbar eingestellt wird, und

wobei der Doppelmetallcyanid-Katalysator zu der H-funktionellen Startersubstanz oder dem Gemisch von mindestens zwei H-funktionellen Startersubstanzen in Schritt (α1) oder unmittelbar anschließend an Schritt (α2) zugesetzt wird.

**5.** Verfahren gemäß einem der Ansprüche 1 bis 4, wobei als Inertgas Argon und/oder Stickstoff eingesetzt wird.

**6.** Verfahren gemäß einem der Ansprüche 1 bis 5, wobei in den Schritten (β) und/oder (γ) das Kohlendioxid in die Mischung eingeleitet wird durch

(i) Begasung des Reaktionsgemisches im Reaktor von unten,
(ii) Verwendung eines Hohlwellenrührers,
(iii) Kombination aus den Dosierungen gemäß (i) und (ii), und/oder
(iv) Begasung über die Flüssigkeitsoberfläche durch Einsatz entsprechender, typischerweise mehrstufiger ausgeführter Rührorgane.

**7.** Verfahren gemäß einem der Ansprüche 1 bis 5, wobei in den Schritten (β) und/oder (γ) das Kohlendioxid in die Mischung eingeleitet wird durch Begasung des Reaktionsgemisches im Reaktor von unten über ein Einleitrohr, über einen Begasungsring oder über eine Kombination aus Einleitrohr oder Begasungsring mit einem Gas-Zerteilungsrührer.

**8.** Verfahren gemäß Anspruch 7, wobei oberhalb des Gaszerteilungsrührers eine oder mehrere Rührstufen auf der Rührwelle angeordnet sind.

**9.** Verfahren gemäß einem der Ansprüche 1 bis 5, wobei in den Schritten (β) und/oder (γ) das Kohlendioxid in die Mischung eingeleitet wird durch einen Rohrrührer oder eine Schrägblatt-Turbine mit Hohlflügeln.

**10.** Verfahren gemäß einem der Ansprüche 1 bis 9, wobei die eingesetzten H-funktionellen Startersubstanzen ausgewählt sind aus mindestens einer der Gruppe bestehend aus Alkohole, Amine, Thiole, Aminoalkohole, Thioalkohole, Hydroxyester, Polyetherpolyole, Polyesterpolyole, Polyesteretherpolyole, Polycarbonatpolyole, Polyethercarbonatpolyole, Polyethylenimine, Polyetheramine Polytetrahydrofurane, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren und $C_1$-$C_{24}$ Alkyl-Fettsäureester, die im Mittel mindestens 2 OH-Gruppen pro Molekül enthalten.

**11.** Verfahren gemäß einem der Ansprüche 1 bis 10, wobei die eingesetzten H-funktionellen Startersubstanzen ausgewählt sind aus mindestens einer der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Startersubstanz und Propylenoxid bzw. einer di- oder tri-H-funktionellen Startersubstanz, Propylenoxid und Ethylenoxid aufgebaut ist und die Polyetherpolyole ein Molekular-

gewicht $M^n$ im Bereich von 62 bis 4500 g/mol und eine Funktionalität von 2 bis 3 aufweisen.

**12.** Verfahren gemäß einem der Ansprüche 1 bis 11, wobei der eingesetzte Doppelmetallcyanid-Katalysator mindestens eine Doppelcyanidverbindung ausgewählt aus der Gruppe bestehend aus Zinkhexacyanocobaltat(III), Zinkhexacyanoiridat(III), Zinkhexacyanoferrat(III) und Cobalt(II)hexacyanocobaltat(III) enthält.

**13.** Verfahren gemäß einem der Ansprüche 1 bis 12, wobei der eingesetzte Doppelmetallcyanid-Katalysator zusätzlich mindestens einen organischen Komplexliganden ausgewählt aus der Gruppe bestehend aus aliphatischem Ether, Ethanol, Isopropanol, n-Butanol, iso-Butanol, sek.-Butanol, tert-Butanol, 2-Methyl-3-buten-2-ol, 2-Methyl-3-butin-2-ol, Ethylenglykol-mono-tert-butylether, Diethylenglykol-mono-*tert*-butylether, Tripropylenglykol-mono-methylether und 3-Methyl-3-oxetan-methanol.

**14.** Verfahren gemäß einem der Ansprüche 1 bis 13, welches in einem Rohrreaktor, Rührkessel oder Schlaufenreaktor durchgeführt wird.

**15.** Verfahren gemäß Anspruch 1 oder 2, **dadurch gekennzeichnet, dass** es durchgeführt wird in einem Rührkessel, Rohrreaktor oder Schlaufenreaktor und dass in Schritt ($\gamma$) eine oder mehrere H-funktionellen Starterverbindungen während der Reaktion kontinuierlich in den Rührkessel zudosiert werden.

Europäisches Patentamt
European Patent Office
Office européen des brevets

# EUROPÄISCHER RECHERCHENBERICHT

Nummer der Anmeldung
EP 11 17 4410

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| A | DE 101 47 712 A1 (BASF AG [DE]) 17. April 2003 (2003-04-17) ----- | 1-15 | INV. C08G64/34 C08G65/26 |
| A | US 5 844 070 A (HAYES JOHN E [FR] ET AL) 1. Dezember 1998 (1998-12-01) ----- | 1-15 | |
| T | WO 2011/089120 A1 (BAYER MATERIALSCIENCE AG [DE]; GUERTLER CHRISTOPH [DE]; GRASSER STEFAN) 28. Juli 2011 (2011-07-28) ----- | 1-15 | |
| | | | RECHERCHIERTE SACHGEBIETE (IPC) |
| | | | C08G |

Der vorliegende Recherchenbericht wurde für alle Patentansprüche erstellt

2

| Recherchenort | Abschlußdatum der Recherche | Prüfer |
|---|---|---|
| München | 19. Dezember 2011 | Lohner, Pierre |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 11 17 4410

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-12-2011

| Im Recherchenbericht angeführtes Patentdokument | Datum der Veröffentlichung | Mitglied(er) der Patentfamilie | Datum der Veröffentlichung |
|---|---|---|---|
| DE 10147712 A1 | 17-04-2003 | DE 10147712 A1 | 17-04-2003 |
| | | WO 03029240 A1 | 10-04-2003 |
| | | WO 03029325 A1 | 10-04-2003 |
| US 5844070 A | 01-12-1998 | AU 7642798 A | 11-12-1998 |
| | | BR 9809835 A | 20-06-2000 |
| | | CA 2287247 A1 | 26-11-1998 |
| | | CN 1259887 A | 12-07-2000 |
| | | DE 69812348 D1 | 24-04-2003 |
| | | DE 69812348 T2 | 06-11-2003 |
| | | EP 0981407 A1 | 01-03-2000 |
| | | ES 2195341 T3 | 01-12-2003 |
| | | ID 22969 A | 23-12-1999 |
| | | JP 4368427 B2 | 18-11-2009 |
| | | JP 2001525878 A | 11-12-2001 |
| | | TW 530070 B | 01-05-2003 |
| | | US 5844070 A | 01-12-1998 |
| | | WO 9852689 A1 | 26-11-1998 |
| WO 2011089120 A1 | 28-07-2011 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0222453 A
- WO 2003029325 A
- EP 1359177 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- JP 4145123 B
- WO 0139883 A
- WO 0180994 A


### In der Beschreibung aufgeführte Nicht-Patentliteratur


- **INOUE et al.** Copolymerization of Carbon Dioxide and Epoxide with Organometallic Compounds. *Die Makromolekulare Chemie,* 1969, vol. 130, 210-220